# EUROPÄISCHE PATENTSCHRIFT

(11) **EP 4 298 306 B1**
(45) Veröffentlichungstag und Bekanntmachung des Hinweises auf die Patenterteilung: **09.12.2026**
(21) Anmeldenummer: 22707425.9
(22) Anmeldetag: 22.02.2022
(51) Int. Cl.: E06B 3/663, E06B 3/67

(54) **ANSCHLUSSELEMENT FÜR ISOLIERVERGLASUNGEN MIT ELEKTRISCH LEITFÄHIGER BESCHICHTUNG UND/ODER ELEKTRISCH STEUERBAREM FUNKTIONSELEMENT**
CONNECTION ELEMENT FOR INSULATING GLAZING WITH ELECTRICALLY CONDUCTIVE COATING AND/OR ELECTRICALLY CONTROLLABLE FUNCTIONAL ELEMENT
ÉLÉMENT DE RACCORDEMENT POUR VITRAGES ISOLANTS POURVU DE REVÊTEMENT ÉLECTROCONDUCTEUR ET/OU D'ÉLÉMENT FONCTIONNEL À COMMANDE ÉLECTRIQUE

(30) Priorität: 26.02.2021 EP 21159468
(43) Veröffentlichungstag der Anmeldung: 03.01.2024
(73) Patentinhaber: Saint-Gobain Glass France, 92400 Courbevoie (FR)
(72) Erfinder: HIRSCH, Michael, Lakeville, Minnesota 55044 (US); HERMANGE, Francois, 52074 Aachen (DE); REUL, Bernhard, 52134 Herzogenrath (DE)
(74) Vertreter: Obermair, Christian Egbert
(86) Internationale Anmeldenummer: PCT/EP2022/054394
(87) Internationale Veröffentlichungsnummer: WO 2022/180032

(56) Entgegenhaltungen:
- WO-A1-2020/001977
- WO-A1-2020/007638
- DE-B3- 102007 059 818

## Beschreibung

Die Erfindung betrifft eine Isolierverglasung mit Anschlusselement und ein Verfahren zum Verlöten des Anschlusselements.

Isolierverglasungen werden an Gebäuden aus ästhetischen Gründen immer häufiger in Glasfassaden verbaut, besonders wenn die Fassade als Ganzglasfassade optisch ausgeführt wird. Eine derartige Isolierverglasung besteht aus mindestens zwei Scheiben, die durch einen Abstandhalter auf Abstand zueinander gehalten werden. Die Scheiben können eine Wärmeschutz- und/oder Sonnenschutzbeschichtung aufweisen. Derartigen Beschichtungen können auch silberhaltig sein und somit eine geringe Transmission von infraroter Strahlung ermöglichen. Dadurch kann die Temperatur im Innern eines Gebäudes gesenkt werden. Neben der wichtigen Eigenschaft der Wärmeisolierung spielen im Bereich der Gebäudeverglasung zunehmend auch funktionelle sowie optische und ästhetische Merkmale eine wichtige Rolle.

In den letzten Jahren haben Verglasungen mit elektrochromen Eigenschaften oder solche mit elektrisch steuerbaren Flüssigkristallschichten zur Steuerung der Lichttransmission immer mehr Verwendung gefunden, wie sie beispielsweise aus der WO 2020/007638 A1 bekannt sind. Eine Isolierverglasung mit einer elektrochromen Beschichtung benötigt eine elektrische Verbindung und Sammelleiter. Ein Problem, das mit den in Isolierverglasungen vorhandenen Sammelleitern verbunden ist, besteht darin, dass die Sammelleiter sich allgemein im Verglasungsinnenraum befinden und sowohl von außen als auch innen sichtbar sind, was den sichtbaren Bereich des Fensters verringert und überdies unter ästhetischen Gesichtspunkten unansehnlich ist.

Bekannt ist eine undurchsichtige Beschichtung, die gewöhnlich durch Siebdruck auf eine Scheibe aufgebracht wird, oder eine undurchsichtige Komponente, die an einer Scheibe angebracht wird, um so die Sammelschiene zu verdecken. Der ästhetische Nutzen ist sehr begrenzt, da relativ große Bereiche der Scheibe mit der undurchsichtigen Beschichtung oder Komponente versehen werden müssen, um eine geeignete Abdeckung der Sammelleiter bei Betrachtung von außen zu erreichen, was den sichtbaren Bereich des Isolierglases übermäßig einschränkt. Aus produktionstechnischen Gründen haben außerdem die undurchsichtige Beschichtung bzw. Komponente und die Sammelleiter unterschiedliche Farben, was bei einer Betrachtung von innen aus ästhetischen Gründen ebenfalls nicht wünschenswert ist. Des Weiteren werden die Sammelleiter in der Isolierverglasung in der Regel nur von der Außenseite verdeckt. Bei Betrachtung von der Innenseite eines Raumes sind die Sammelleiter und die Lötfläche aber sichtbar, was der Ästhetik ebenfalls abträglich ist.

Sammelleiter nach dem Stand der Technik sind in der Regel bandförmig oder drahtförmig ausgebildet. Die Sammelleiter bestehen aus einem elektrisch leitenden Material, wie Silber oder Kupfer. Sie können beispielsweise durch Aufdrucken einer leitfähigen Silberpaste auf der elektrisch leitfähigen und/oder elektrisch schaltbaren Beschichtung zur elektrischen Kontaktierung hergestellt werden. Die eingebrannte leitfähige Silberpaste enthält Silber-Partikel. Wird die Silberpaste eingebrannt, so sollten Schäden wie ein Kurzschluss zwischen den Flächenelektroden der elektrochromen Beschichtung vermieden werden.

Elektrische Anschlusselemente für Verglasungen und insbesondere für Fahrzeugverglasungen nach dem Stand der Technik sind beispielsweise aus der DE 10 2007 059 818 B3 oder der WO 2020/001977 A1 bekannt.

Der Erfindung liegt nun die Aufgabe zu Grunde, ein verbessertes Anschlusselement bereitzustellen, mit dem sich unter ästhetischen und insbesondere auch funktionalen Gesichtspunkten verbesserte Isolierverglasung einfach und kostengünstig herstellen lassen.

Die Aufgabe der vorliegenden Erfindung wird erfindungsgemäß durch eine Isolierverglasung mit Anschlusselement gemäß Anspruch 1 gelöst. Bevorzugte Ausführungen gehen aus den Unteransprüchen hervor.

Die erfindungsgemäße Isolierverglasung umfasst mindestens eine erste Scheibe, eine zweite Scheibe und mindestens einen Abstandshalter, der zwei Scheibenkontaktflächen aufweist, die parallel zueinander verlaufen, wobei
- eine erste Scheibenkontaktfläche über ein Dichtmittel mit der ersten Scheibe verbunden ist und eine zweite Scheibenkontaktfläche über ein Dichtmittel mit der zweiten Scheibe verbunden ist, so dass ein Verglasungsinnenraum und ein Verglasungsaußenraum gebildet werden,
- die erste Scheibe auf der dem Verglasungsinnenraum zugewandten Seite zumindest teilweise mit einer elektrisch leitfähigen Beschichtung und/oder einem elektrisch steuerbaren Funktionselement versehen ist und zwei Sammelleiter zur elektrischen Kontaktierung der elektrischen leitfähigen Beschichtung und/oder des elektrisch steuerbaren Funktionselements vorgesehen sind,
- mindestens ein Sammelleiter ein elektrisch leitfähiges Klebeband umfasst, und das elektrisch leitfähige Klebeband eine elektrisch leitfähige Haftschicht, eine Leiterbahn und eine opake, elektrisch isolierende Abdeckung umfasst,
wobei die Isolierverglasung ein Anschlusselement, insbesondere zur Kontaktierung der elektrisch leitfähigen Beschichtung und/oder dem elektrisch steuerbaren Funktionselement in der Isolierverglasung, aufweist, mindestens umfassend:
- mindestens einen Flachleiter, der auf einer ersten Seite einer elektrisch isolierenden Trägerfolie angeordnet ist, wobei
- der Flachleiter mindestens einen ersten Anschlussbereich mit mindestens einem ersten Lotdepot und mindestens einen zweiten Anschlussbereich mit mindestens einem zweiten Lotdedot aufweist, und
- mindestens eine zweite Klebeschicht, die unterhalb und/oder neben dem zweiten Anschlussbereich auf einer der ersten Seite abgewandten zweiten Seite der Trägerfolie angeordnet ist,
   und
- der mindestens eine Flachleiter des Anschlusselements im erstem Anschlussbereich mit dem Sammelleiter verlötet ist,
- das Anschlusselement zwischen Abstandshalter und der ersten Scheibe aus dem Verglasungsinnenraum herausgeführt ist und
- das Anschlusselement auf der dem zweiten Anschlussbereich abgewandten Seite der Trägerfolie über die zweite Klebeschicht mit einer Außenfläche des Abstandshalters verbunden ist.

Das erfindungsgemäße Anschlusselement, insbesondere zur Kontaktierung einer elektrisch leitfähigen Beschichtung und/oder einem elektrisch steuerbaren Funktionselement in einer Isolierverglasung, umfasst zumindest:
- mindestens einen Flachleiter, der zumindest abschnittsweise und insbesondere vollständig auf einer ersten Seite einer elektrisch isolierenden Trägerfolie angeordnet ist und
- der Flachleiter mindestens einen ersten Anschlussbereich mit mindestens einem ersten Lotdepot und mindestens einem zweiten Anschlussbereich mit mindestens einem zweiten Lotdedot aufweist, und
- mindestens eine zweite Klebeschicht, die unterhalb und/oder neben dem zweiten Anschlussbereich auf einer der ersten Seite abgewandten zweiten Seite der Trägerfolie angeordnet ist.

Unterhalb bedeutet hier im Deckungsbereich, d.h. heißt in Durchsicht oder in orthogonaler Projektion auf bzw. durch die Trägerfolie.

Der Begriff Anschlussbereich beschreibt bevorzugt die Oberfläche des Flachleiters unter dem jeweiligen Lotdepot und dem unmittelbar angrenzenden freiliegenden (d.h. ohne Bedeckung durch die Abdeckung und/oder andere Schichten befindlichen) zur Verlötung geeigneten Bereich. Er kann auch als Kontaktbereich oder Lötbereich bezeichnet werden.

In einer vorteilhaften Ausgestaltung eines erfindungsgemäßen Anschlusselements ist der Flachleiter eine Folie, die bevorzugt ein Metall, besonders bevorzugt Kupfer, Zinn und/oder Silber und insbesondere verzinntes Kupfer, enthält oder daraus besteht. Die Folie weist bevorzugt eine Dicke von 50 µm bis 200 µm und insbesondere von 80 µm bis 120 µm auf.

Der Flachleiter ist vorteilhafterweise vollständig auf der Trägerfolie angeordnet, d.h. er ragt beispielsweise nicht darüber hinaus. Dadurch die der Flachleiter besonders gut vor Beschädigung geschützt.

Der Flachleiter verbindet jeweils mindestens einen ersten Anschlussbereich mit mindestens einem zweiten Anschlussbereich elektrisch und bevorzugt galvanisch.

Der Flachleiter ist bevorzugt mit der Trägerfolie fest verbunden, beispielsweise durch Verkleben oder unmittelbares Aufbringen einer Metallfolie als Metallschicht auf die Trägerfolie, beispielsweise durch Aufdampfen oder Aufsputtern.

In einer vorteilhaften Ausgestaltung eines erfindungsgemäßen Anschlusselements ist die Trägerfolie eine elektrisch isolierende Folie, bevorzugt eine Polymerfolie und insbesondere eine Folie, die Polyimid enthält oder draus besteht. Die Dicke der Trägerfolie beträgt bevorzugt von 50 µm bis 300 µm, besonders bevorzugt 100 µm bis 200 µm und insbesondere von 150 µm bis 160 µm. Die Trägerfolie ist bevorzugt opak, d.h. im Wesentlichen undurchsichtig und besonders bevorzugt schwarz.

Polyimid ist als Trägerfolie besonders geeignet, da es eine hohe Temperaturbeständigkeit von beispielsweise mehr als 400°C aufweist, schwer entflammbar ist und nicht schmilzt.

Opazität bezeichnet hier und im Folgenden im Allgemeinen das Gegenteil zu Transparenz. Mit anderen Worten weist die entsprechende Folie oder Schicht mangelnde Durchsichtigkeit auf. Sie ist undurchsichtig, trüb oder dunkel, insbesondere schwarz, ausgebildet.

In einer weiteren vorteilhaften Ausgestaltung eines erfindungsgemäßen Anschlusselements ist mindestens eine erste Klebeschicht um den ersten Anschlussbereich auf der ersten Seite der Trägerfolie und bevorzugt zumindest abschnittsweise um das erste Lotdepot herum, angeordnet. Im Bereich des Flachleiters ist der Flachleiter dann zwischen Trägerfolie und erster Klebeschicht angeordnet. Dies dient insbesondere der sicheren Positionierung des Anschlusselements am Ort der Verlötung. Des Weiteren verhindert die Klebeschicht ein Ablösen der Trägerfolie in der Umgebung der Lötstelle.

Die Klebeschicht kann dabei beispielsweise eine Schicht eines Klebers oder ein doppelseitiges Klebeband enthalten oder daraus bestehen.

In einer weiteren vorteilhaften Ausgestaltung eines erfindungsgemäßen Anschlusselements ist eine Abdeckfolie zumindest abschnittsweise und bevorzugt vollständig bis auf ersten und den zweiten Anschlussbereich und besonders bevorzugt bis auf die Lotdepots auf der ersten Seite der Trägerfolie angeordnet ist. Im Bereich des Flachleiters ist der Flachleiter dann zwischen Trägerfolie und Abdeckfolie angeordnet.

In einer vorteilhaften Ausgestaltung eines erfindungsgemäßen Anschlusselements ist die Abdeckfolie eine elektrisch isolierende Folie, bevorzugt eine Polymerfolie und insbesondere eine Folie, die Polyimid enthält oder draus besteht. Die Dicke der Abdeckfolie beträgt bevorzugt von bevorzugt von 50 µm bis 300 µm, besonders bevorzugt 100 µm bis 200 µm und insbesondere von 150 µm bis 160 µm. Die Abdeckfolie ist bevorzugt opak, d.h. im Wesentlichen undurchsichtig und besonders bevorzugt schwarz.

Polyimid ist als Abdeckfolie besonders geeignet, da es eine hohe Temperaturbeständigkeit von beispielsweise mehr als 400°C aufweist, schwer entflammbar ist und nicht schmilzt.

In einer vorteilhaften Ausgestaltung eines erfindungsgemäßen Anschlusselements beträgt die Gesamtdicke aller Folien und Schichten kleiner oder gleich 350 µm und insbesondere kleiner oder gleich 260 µm. Dadurch lässt sich eine besonders hohe Gasdichtigkeit bei Einbau in einer Isolierverglasung und insbesondere eine besondere Argon-Dichtigkeit, erzielen.

Vorteilhafterweise weisen die erste Klebeschicht und die Abdeckung angrenzend an das erste Lotdepot mindestens eine Aussparung auf, die sich bevorzugt bis zum Rand der Trägerfolie erstreckt. Die Aussparung hat den besonderen Vorteil, dass Lot aus den Lotdepots während des Lötvorgangs in den Bereich der Aussparung ausweichen kann, so dass sich eine optimale Dicke der Lötverbindung einstellen kann. Des Weiteren können Ausgasungen aus dem Lot, der Kleber oder des zu verlötenden Sammelleiters ausweichen und abfließen. Diese Ausgasungen können teilweise sehr aggressiv sein und die empfindlichen Schichten einer elektrisch leitfähigen Beschichtung oder eines elektrisch steuerbaren Funktionselements zerstören oder deren optisches Erscheinungsbild beeinträchtigen.

Üblicherweise werden die zu kontaktierenden Sammelleiter und damit auch ersten Anschlussbereiche am Rand einer flächigen Beschichtung angeordnet. Die Aussparungen werden vorteilhafterweise derart positioniert, dass sie von der flächigen Beschichtung wegweisen, so dass Austretenden Lötzinn oder andere "Spritzer" oder Beschädigungen der flächigen Beschichtung im nicht sichtbaren Bereich erfolgen.

Die Abdeckfolie und/oder die Klebeschichten sind bevorzugt opak, d.h. im Wesentlichen undurchsichtig und besonders bevorzugt schwarz.

In einer weiteren vorteilhaften Ausgestaltung weist die erfindungsgemäße Trägerfolie eine U-förmige Kontur auf, wobei jeweils ein Anschlussbereich auf einem Schenkel der U-förmigen Kontur angeordnet ist.

In einer weiteren vorteilhaften Ausgestaltung eines erfindungsgemäßen Anschlusselements sind zwei Flachleiter auf einer (gemeinsamen) Trägerfolie angeordnet.

In einer weiteren vorteilhaften Ausgestaltung weist die erfindungsgemäße Trägerfolie eine Doppel-T-förmige Kontur auf, wobei jeweils ein Anschlussbereich auf einem Schenkel der Doppel-T-förmigen Kontur angeordnet ist. Die ist besonders vorteilhaft, bei einer Trägerfolie, die zwei Flachleiter aufweist, da sich die Anschlussbereiche über einen lediglich schmalen Verbindungsbereich verbinden lassen.

In einer weiteren vorteilhaften Ausgestaltung ist die erfindungsgemäße Trägerfolie im erstem Anschlussbereich und/oder zweiten Anschlussbereich jeweils streifenförmig ausgebildet und bevorzugt sind die Streifen parallel zueinander angeordnet und insbesondere sind die parallelen Streifen durch mindestens einen im Wesentlichen orthogonal verlaufenden Verbindungsbereich miteinander verbunden.

In einer vorteilhaften Weiterbildung ist am Verbindungsbereich mindestens ein Dichtelement, bevorzugt ein rechteckiges Dichtelement angeordnet, welches besonders bevorzugt Polyisobutylen enthält oder daraus besteht. Das Dichtelement kann bevorzugt einseitig angeordnet sein oder zwei Dichtelemente können beidseitig auf der Trägerfolie angeordnet sein.

Es versteht sich, dass einer oder jeder Flachleiter auch zwei oder mehr Lotdepots an ihren jeweiligen (ersten oder zweiten) Anschlussbereichen aufweisen können, beispielsweise um 4eine Redundanz in der Kontaktierung zu erzeugen und dadurch Ausfallsraten, beispielsweise in der Lötverbindung, zu reduzieren.

Die Dimensionen der Trägerfolie, ggf. der Abdeckfolie und der Flachleiter können den jeweiligen Gegebenheiten der jeweiligen Anordnung angepasst sein. Bevorzugt wird die Breite der Trägerfolie, der Abdeckfolie und insbesondere des Flachleiters auf die Breite der Sammelleiter und insbesondere deren Leiterbahn abgestimmt. Die Längen der Trägerfolie, der Abdeckfolie und der Flachleiter werden bevorzugt an den zu überbrückenden Abstand zwischen den Sammelleitern und die Länge des Verbindungsbereichs an den Abstand der Sammelleiter zu der Außenfläche des Abstandshalters bei einer erfindungsgemäßen Isolierverglasung angepasst.

In einer weiteren vorteilhaften Ausgestaltung weisen die einzelnen Schenkel der Trägerfolie eine Breite von 1 mm bis 10 mm, bevorzugt 2 mm bis 5 mm auf und/oder eine Länge von 30 mm bis 200 mm, bevorzugt 40 mm bis 100 mm auf.

In einer weiteren vorteilhaften Ausgestaltung weisen die Flachleiter, bevorzugt im Bereich der einzelnen Schenkel, eine Breite von 1 mm bis 10 mm, bevorzugt 2 mm bis 5 mm auf und/oder eine Länge von 30 mm bis 200 mm, bevorzugt 50 mm bis 100 mm auf. Vorteilhafterweise sind die Flachleiter schmaler als die Trägerfolie ausgebildet, so dass die Trägerfolie zumindest abschnittsweise oder vollständig einen Überstand über den Flachleiter mit einer Breite von 0,1 mm bis 2 mm und insbesondere von 0,2 mm bis 0,5 mm, aufweist.

Derartige Breiten der Flachleiter sind besonders geeignet um in Verbindung mit den oben genannten Dicken eine ausreichende Stromtragfähigkeit zu erzielen.

Die Lotdepots können beliebige Formen aufweisen. Die Fläche der Lotdepots und somit deren Länge und Breit, sowie deren Dicke kann derart gewählt werden, dass sich eine erforderliche mechanische Stärke der Lötverbindung ergibt. Die Breite des Lotdepots ist vorteilhafterweise auf die Breite der Sammelleiter und insbesondere deren Leiterbahn abgestimmt. Durch Variation der Länge der Lötverbindung lässt sich die mechanische Zugbelastbarkeit der Lötverbindung einstellen.

Unterschiedliche Materialien von Lot, Flachleiter und Leiterbahn der Sammelleiter sowie die Parameter des Lötprozesses haben Einfluss auf die Zugfestigkeit und mechanische Stärke der Lötverbindung. Eine geeignete Lötfläche und Lotmenge zum Erreichen einer bestimmten Zugfestigkeit lässt sich im Rahmen einfacher Experiment für den jeweiligen Anwendungsfall ermitteln.

Bevorzugt sind streifenförmige Lotdepots mit einer Länge von 5 mm bis 30 mm, bevorzugt von 9 mm bis 20 mm und insbesondere von 10 mm bis 15 mm und/oder einer Breite von 0,5 mm bis 5 mm, bevorzugt von 0,5 mm bis 3 mm und insbesondere von 0,7 mm bis 2,5 mm.

Es versteht sich, dass die Länge, Breite und Dicke der Trägerfolie, der Flachleiter und der Lotdepots an die Anforderung des jeweiligen Einzelfalls angepasst werden können.

In einer vorteilhaften Weiterbildung ist im Anschlusselement und insbesondere im Verbindungsbereich eine Zugentlastung angeordnet, beispielsweise in Form einer U- oder V-förmigen Faltung der Trägerfolie samt Flachleiter und gegebenenfalls Abdeckschicht.

Ein weiterer Aspekt der Erfindung umfasst ein Anschlusssystem, mindestens umfassend
- ein erfindungsgemäßes Anschlusselement,
- mindestens einen Sammelleiter, der ein elektrisch leitfähiges Klebeband umfasst oder daraus besteht, und das elektrisch leitfähige Klebeband eine elektrisch leitfähige Haftschicht, eine Leiterbahn und eine opake, elektrisch isolierende Abdeckung umfasst oder daraus besteht,
   wobei
   - das erfindungsgemäße Anschlusselement zumindest abschnittsweise mit dem Sammelleiter über die Haftschicht verbunden und insbesondere verklebt ist und
   - der mindestens eine Flachleiter des Anschlusselements in mindestens dem ersten Anschlussbereich mit dem Sammelleiter über eine Lötverbindung elektrisch leitend, bevorzugt galvanisch, verbunden ist.

Die Erfindung betrifft eine Isolierverglasung mit erfindungsgemäßem Anschlusselement. Die erfindungsgemäße Isolierverglasung umfasst mindestens zwei Scheiben und mindestens einen Abstandshalter, der zwei Scheibenkontaktflächen aufweist, die parallel zueinander verlaufen. Eine erste Scheibenkontaktfläche ist über ein Dichtmittel mit einer ersten Scheibe der beiden Scheiben verbunden und eine zweite Scheibenkontaktfläche ist über ein Dichtmittel mit der zweiten Scheibe verbunden, so dass ein Verglasungsinnenraum und ein Verglasungsaußenraum gebildet werden. Eine der beiden Scheiben ist auf der dem Verglasungsinnenraum zugewandten Seite zumindest teilweise mit einer elektrisch leitfähigen Beschichtung und/oder einem elektrisch steuerbaren Funktionselement versehen. Zwei Sammelleiter sind zur elektrischen Kontaktierung der elektrisch leitfähigen Beschichtung und/oder des elektrisch steuerbaren Funktionselements vorgesehen.

Des Weiteren umfasst die erfindungsgemäße Isolierverglasung mindestens ein erfindungsgemäßes Anschlusselement, wobei
- der mindestens eine Flachleiter des Anschlusselements im erstem Anschlussbereich mit dem Sammelleiter verlötet ist,
- das Anschlusselement zwischen Abstandshalter und der ersten Scheibe aus dem Verglasungsinnenraum herausgeführt ist und
- das Anschlusselement auf der dem zweiten Anschlussbereich abgewandten Seite II der Trägerfolie über die zweite Klebeschicht mit einer Außenfläche des Abstandshalters verbunden und bevorzugt verklebt ist.

Vorteilhafterweise umfasst zumindest ein Sammelleiter ein elektrisch leitfähiges Klebeband, wobei das elektrisch leitfähige Klebeband eine elektrisch leitfähige Haftschicht, eine Leiterbahn und eine opake, elektrisch isolierende Abdeckung aufweist. Die Sammelleiter sind vorzugsweise streifenförmig ausgebildet.

Durch die erfindungsgemäße Isolierverglasung kann eine deutliche Verbesserung des ästhetischen Erscheinungsbildes der Isolierverglasung gegenüber dem Stand der Technik erreicht werden, da die Leiterbahn des Sammelleiters durch die Abdeckung überdeckt wird und dadurch, insbesondere bei Betrachtung von der Innenseite eines Raumes, weniger sichtbar ist.

Die Erfindung bringt mehrere Vorteile mit sich. So können einerseits durch die Verwendung eines elektrisch leitfähigen Klebebandes erheblich Kosten eingespart werden. Zudem kann durch die Verklebung des Klebebandes auf der elektrisch leitfähigen Beschichtung und/oder dem elektrisch steuerbaren Funktionselement verhindert werden, dass durch ein Einbrennen von Sammelleitern auf dem Funktionselement ein Kurzschluss zwischen den Elektrodenschichten des Funktionselements entsteht.

Das elektrisch leitfähige Klebeband ist über die elektrisch leitfähige Haftschicht mit der elektrisch leitfähigen Beschichtung und/oder dem elektrisch steuerbaren Funktionselement verbunden. Die elektrisch leitfähige Haftschicht enthält mindestens ein elektrisch leitfähiges Material, vorzugsweise metallisches Material, beispielsweise Nickel, Gold oder Aluminium. Bevorzugt ist die Haftschicht Silber-frei, da dies die Kompatibilität mit den bevorzugt verwendeten Elektrodenschichten verbessert. Möglich ist auch, dass die elektrisch leitfähige Haftschicht ein nicht-metallisches elektrisch leitfähiges Material enthält, beispielsweise Graphit oder Kohlenstoff. Das mindestens eine elektrisch leitfähige Material kann in eine elektrisch nichtleitende Klebstoffmatrix eingebracht sein, beispielsweise Epoxidharz. Das mindestens eine elektrisch leitfähige Material ist in einer solchen Menge in der Haftschicht enthalten, dass eine gewünschte Stromtragfähigkeit erreicht wird. Vorzugsweise ist das mindestens ein elektrisch leitfähige Material mit einem Masseanteil von mindestens 70% in der Haftschicht enthalten.

Der Kleber der Haftschicht ist vorteilhafterweise ein wärmeaktivierbarer Kleber, dessen Aktivierungstemperatur bevorzugt von 130°C bis 250°C, besonders bevorzugt von 130°C bis 180°C und insbesondere von 160°C bis 180°C oder von 180°C bis 250°C beträgt. Vorteilhafterweise darf der Kleber der Haftschicht, z.B. beim Lötvorgang, maximal einer Temperatur von kleiner 300°C, bevorzugt kleiner 250°C und insbesondere kleiner oder gleich 230°C ausgesetzt werden. Bei derart niedrigen Temperaturen findet keine Beeinträchtigung der Haftschicht hinsichtlich der elektrischen Leitfähigkeit, der Klebekraft oder eine Blasenbildung statt.

Die Leiterbahn des Klebebands ist ein elektrischer Leiter, dessen Breite deutlich größer ist als seine Dicke. Die Leiterbahn ist bevorzugt derart dünn ausgebildet (d.h. die Dicke ist derart gering), dass sie flexibel und biegbar ist. In einer vorteilhaften Ausgestaltung des Klebebandes besteht die Leiterbahn aus einer streifen- oder bandförmigen Metallfolie. Beispielsweise enthält die Leiterbahn Kupfer, Aluminium, Zinn, Gold oder Silber. Die Leiterbahn kann auch Legierungen mit den genannten Metallen enthalten oder daraus bestehen.

In einer vorteilhaften Ausgestaltung des erfindungsgemäßen Klebebandes enthält die opake, elektrisch isolierende Abdeckung Polyimid oder besteht daraus. Das elektrisch leitfähige Klebeband weist eine Dicke von 50 µm bis 1 mm auf, bevorzugt 110 µm. Beispielsweise kann das Klebeband 80 µm bis 120 µm dick sein und dabei die Haftschicht eine Dicke von 25 µm und die Leiterbahn eine Dicke von 35 µm aufweisen.

In einer weiteren vorteilhaften Ausgestaltung weist das elektrisch leitfähige Klebeband eine Breite von 1 mm bis 10 mm, bevorzugt 2 mm bis 4 mm auf. Derartige Breiten sind besonders geeignet um in Verbindung mit den oben genannten Dicken eine ausreichende Stromtragfähigkeit zu erzielen. Es versteht sich, dass die Länge, Breite und Dicke des Klebebands an die Anforderung des jeweiligen Einzelfalls angepasst werden können.

In einer weiteren vorteilhaften Ausgestaltung bedeckt die opake, elektrisch isolierende Abdeckung die Leiterbahn des elektrisch leitfähigen Klebebands nahezu vollständig. Dadurch ergibt sich der Vorteil, dass die Leiterbahn vor Korrosion und Verschmutzung besser geschützt ist.

In einer vorteilhaften Ausgestaltung weist der mindestens eine erfindungsgemäße Sammelleiter im Verlötungsbereich eine Aussparung in der opaken, elektrisch isolierenden Abdeckung auf.

Des Weiteren kann sich ein erster Sammelleiter entlang einer ersten Seitenkante der elektrischen leitfähigen Beschichtung und/oder des elektrisch steuerbaren Funktionselements und ein zweiter Sammelleiter entlang einer zweiten Seitenkante der elektrischen leitfähigen Beschichtung und/oder des elektrisch steuerbaren Funktionselements erstrecken. In eine besonders bevorzugten Ausführungsform sind die zwei Sammelleiter auf gegenüberliegenden Seiten der Isolierverglasung im Verglasungsaußenraums angeordnet. Die Sammelleiter sind bevorzugt so angeordnet, dass sie im eingebauten Zustand der Isolierverglasung horizontal angeordnet sind. Es ist aber auch möglich, dass sie im eingebauten Zustand vertikal angeordnet sind.

In einer weiteren Ausgestaltung kann der Sammelleiter auch um die Ecke geführt werden, d.h. der Sammelleiter befindet sich an zwei Seiten der Isolierverglasung, die miteinander verbunden sind. In diesem Fall kann der Sammelleiter auch unterbrochen ausgeführt sein, insbesondere bei großen Isolierverglasungen, und zweiteilig ausgebildet sein. Der Sammelleiter weist dann zwei zueinander abgewinkelte Schenkel auf, die unter einem Winkel, insbesondere einem Winkel kleiner als 180°, bevorzugt von ca. 90°, zueinander angeordnet sind. An einer Ecke der Isolierverglasung können die Schenkel beispielweise über ein elektrisch leitfähiges Brückenelement miteinander elektrisch leitend verbunden sein. Das Brückenelement weist hierzu ein elektrisch leitfähiges Material, beispielsweise Kupfer, auf.

Alternativ zur Verbindung über das Brückenelement kann ein erster Schenkel einen zweiten Schenkel zumindest teilweise überlagern, wobei der erste Schenkel und der zweite Schenkel zueinander winklig angeordnet sind.

Gemäß einer weiteren vorteilhaften Ausgestaltung weist der zweite Schenkel einen Anschlussbereich zur elektrischen Kontaktierung des ersten Schenkels mit dem zweiten Schenkel auf. Die opake, elektrisch isolierende Abdeckung des zweiten Schenkels weist dazu eine Aussparung im Anschlussbereich auf. Die Aussparung bildet einen materialfreien Durchgang bis zur Leiterbahn des zweiten Schenkels. Die Aussparung ist beispielsweise eine rechteckig, kreis- oder ovalförmige Öffnung der opaken, elektrisch isolierenden Abdeckung, wobei es sich versteht, dass grundsätzlich beliebige Formen möglich sind. Die Aussparung hat ein solches Volumen, dass der erste Schenkel des Sammelleiters zuverlässig und sicher durch die elektrisch leitfähige Haftschicht an die Leiterbahn des zweiten Schenkels anklebbar ist. Der Anschlussbereich ist vorteilhafterweise flach ausgebildet und besteht bevorzugt aus einem nicht isolierten Bereich des zweiten Schenkels. Derartig flache Anschlussbereiche sind besonders geeignet um elektrisch leitfähige Klebebänder zu kontaktieren, da sie über eine große Fläche verfügen, die mit der elektrisch leitfähigen Haftschicht des Klebebandes in Berührung gebracht werden können und dadurch eine niederohmige elektrische Leitungsverbindung ausbilden.

In einer weiteren Ausgestaltung weist der zweite Schenkel einen ersten Abschnitt, einen zweiten Abschnitt und eine Faltung auf, bei der der erste Abschnitt und der zweite Abschnitt des zweiten Schenkels zumindest teilweise übereinander angeordnet sind. Wobei der erste Abschnitt senkrecht zum zweiten Abschnitt verläuft und die Haftschicht des zweiten Abschnitts dem Verglasungsinnenraum zugewandt ist. Der zweite Abschnitt weist einen Bereich auf, in dem sich der erste Sammelleiter und der zweite Sammelleiter überlagern, so dass eine elektrisch leitende Verbindung zwischen dem ersten und dem zweiten Schenkel des Sammelleiters entsteht. Dabei weist der zweite Abschnitt einen Kontaktbereich aufweist, der zur elektrischen Kontaktierung mit dem ersten Schenkel vorgesehen ist, so dass eine elektrisch leitende Verbindung zwischen dem ersten Schenkel und dem zweiten Schenkel entsteht.

Die Isolierverglasung umfasst mindestens zwei Scheiben, die durch mindestens einen Abstandhalter auf Abstand zueinander gehalten werden. Eine andere Bezeichnung für Isolierverglasung ist Mehrscheiben-Isolierglas. Die Isolierverglasung kann z.B. ein Zweischeiben-Isolierglas, welches zwei Scheiben umfasst, ein Dreischeiben-Isolierglas, welches drei Scheiben umfasst, oder eine Vierscheiben-Isolierglas, welches vier Scheiben umfasst, sein. Die Isolierverglasung umfasst bevorzugt zwei oder drei Scheiben.

Von den mindestens zwei Scheiben der Isolierverglasung sind zwei Scheiben äußere Scheiben, die in Kontakt mit der Außenumgebung sind. Von einer äußeren Scheibe ist eine Seite, die innere Seite oder Innenseite, einem Verglasungsinnenraum zugewandt, und die andere Seite, die äußere Seite oder Außenseite, der Außenumgebung. In einer bevorzugten Ausführungsform ist eine äußere Scheibe ein Verbundglas aus mindestens zwei Einzelgläsern, insbesondere die äußere Scheibe, die im eingebauten Zustand nach außen zeigt. Sofern die Isolierverglasung mehr als zwei Scheiben umfasst, sind eine oder mehr Scheiben, die inneren Scheiben, zwischen den beiden äußeren Scheiben angeordnet. Von einer inneren Scheibe ist eine Seite einem Verglasungsinnenraum zugewandt und die andere Seite einem anderen Verglasungsinnenraum.

Die erfindungsgemäße Isolierverglasung umfasst mindestens einen Abstandshalter, bevorzugt einen oder zwei Abstandshalter. Der Abstandshalter weist zwei zueinander parallel verlaufende Scheibenkontaktflächen auf. Als Abstandshalter können die aus dem Stand der Technik bekannten Abstandshalter eingesetzt werden.

Üblich sind Abstandshalter, die zwei Scheiben voneinander beabstanden. Diese können allgemein für Mehrscheiben-Isoliergläser verwendet werden, wie z.B. Zweischeiben-Isoliergläser, Dreischeiben-Isoliergläser und Vierscheiben-Isoliergläser. Für Dreischeiben-Isoliergläser und Vierscheiben-Isoliergläser sind dementsprechend zwei bzw. drei solcher Abstandshalter erforderlich, einen ersten Abstandshalter zu Beabstandung der einen äußeren Scheibe von der inneren Scheibe und einen zweiten Abstandshalter zu Beabstandung der anderen äußeren Scheibe von der inneren Scheibe. Es sind auch Abstandshalter bekannt, die drei Scheiben voneinander beabstanden können.

In einer bevorzugten Ausführungsform weist der Abstandshalter eine Verglasungsinnenraumfläche, die mit den beiden Scheibenkontaktflächen verbunden ist, und eine Außenfläche, die direkt oder über Verbindungsflächen mit den beiden Scheibenkontaktflächen verbunden ist, auf. Die Verglasungsinnenraumfläche ist dem Verglasungsinnenraum zugewandt, während die Außenfläche, oft auch als Verklebungsfläche bezeichnet, dem Verglasungsaußenraum zugewandt ist.

Die Außenfläche ist in einer bevorzugten Ausführungsform über Verbindungsflächen mit den beiden Scheibenkontaktflächen verbunden, d.h. über eine Verbindungsfläche mit einer Scheibenkontaktfläche und/oder über eine andere Verbindungsfläche mit der anderen Scheibenkontaktfläche, wobei bevorzugt beide Scheibenkontaktflächen über solche Verbindungsflächen mit der Außenfläche verbunden sind. Die Verbindungsfläche kann zum Beispiel in einem Winkel im Bereich von 30° bis 60° zu der Außenfläche stehen. Die beiden Scheibenkontaktflächen stehen in der Regel etwa senkrecht bzw. senkrecht zur Ebene, in der sich die Außenfläche befindet, und/oder zur Ebene, in der sich die Verglasungsinnenraumfläche befindet. In der Regel verlaufen Außenfläche und Verglasungsinnenraumfläche parallel zueinander. Die Verglasungsinnenraumfläche ist in der Regel direkt mit den beiden Scheibenkontaktflächen verbunden. Die Verglasungsinnenraumfläche kann aber gegebenenfalls auch über Verbindungsflächen mit den Scheibenkontaktflächen verbunden sein.

Der Abstandshalter kann gegebenenfalls im Inneren einen oder mehrere Hohlräume aufweisen, bevorzugt einen zentralen Hohlraum. In dem oder den Hohlräumen ist in der Regel Trockenmittel enthalten. Die Verglasungsinnenraumfläche weist bevorzugt Öffnungen auf, um die Aufnahme von Luftfeuchtigkeit durch gegebenenfalls im Abstandshalter vorhandene Trockenmittel zu erleichtern.

Es versteht sich, dass die Abmessungen des Abstandhalters von den Abmessungen der Isolierverglasung abhängen. Die Breite des Abstandhalters kann z.B. im Bereich von 4 mm bis 30 mm, bevorzugt 8 mm bis 16 mm, liegen. Die Höhe des Abstandhalters kann z.B. im Bereich von 5 mm bis 15 mm, bevorzugt 5 mm bis 10 mm, liegen. Die Breite eines Abstandhalters bezieht sich auf die Richtung von einer Seitenkontaktfläche zur anderen Seitenkontaktfläche. Die Höhe bezieht sich auf die Richtung von Außenfläche zur Verglasungsinnenraumfläche.

Im Fall eines Dreischeiben-Isolierglases kann in einer alternativen Ausführungsform ein Abstandshalter eingesetzt werden, der für die Beabstandung von drei Scheiben geeignet ist. Ein solcher Abstandshalter entspricht einem Abstandshalter wie er vorstehend beschrieben wurde, außer dass in der Verglasungsinnenraumfläche zusätzlich eine Aufnahmeeinrichtung für eine Scheibe vorgesehen ist. Die Aufnahmeeinrichtung für eine Scheibe kann z.B. in Form einer Nut ausgebildet sein. Sofern diese Art von Abstandshalter im Inneren einen oder mehrere Trockenmittel enthaltende Hohlräume aufweist, sind bevorzugt zwei Hohlräume vorhanden, wobei sich ein Hohlraum auf einer Seite der Aufnahmeeinrichtung befindet und der andere Hohlraum sich auf der gegenüberliegenden Seite der Aufnahmeeinrichtung befindet. Wie gesagt, können für Dreischeiben-Isoliergläser auch zwei einzelne Abstandshalter für die Beabstandung von jeweils zwei Scheiben eingesetzt werden.

Es versteht sich, dass auch die Abmessungen des Abstandhalters, der für die Beabstandung von drei Scheiben geeignet ist, von den Abmessungen der Isolierverglasung abhängen. Die Breite eines solchen Abstandhalters kann z.B. im Bereich von 10 mm bis 50 mm, bevorzugt 20 bis 36 mm, liegen. Die Höhe kann z.B. im Bereich von 5 mm bis 15 mm, bevorzugt 5 mm bis 10 mm, liegen.

Der Abstandshalter, der in der Isolierverglasung eingesetzt wird, ist z.B. aus Metall oder Kunststoff gebildet, wobei Kunststoff bevorzugt ist. Beispiele für geeignete Metalle sind Edelstahl und Aluminium. Als Kunststoff sind Materialien mit geringerer Wärmeleitfähigkeit, sogenannte "Warme-Kante"-Systeme, bevorzugt. Kunststoff-Abstandshalter werden auch als polymere Abstandshalter bezeichnet.

Abstandshalter, die aus Kunststoff gebildet sind, können z.B. eine oder mehrere Polymere, ausgewählt aus Polyethylen (PE), Polycarbonat (PC), Polypropylen (PP), Polystyrol, Polybutadien, Polynitril, Polyester, Polyurethane, Polymethylmethacrylat, Polyacrylat, Polyamid, Polyethylenterephthalat (PET), Silicon, Polybutylenterephthalat (PBT), AcrylnitrilButadien-Styrol (ABS), Acrylester-Styrol-Acrylnitril (ASA), Acrylnitril-Butadien-Styrol-Polycarbonat (ABS/PC), Styrol-Acrylnitril (SAN), PET/PC, PBT/PC und/oder Copolymere davon enthalten, wobei ABS, ASA, ABS/PC, SAN, PET/PC, PBT/PC und/oder Copolymere davon bevorzugt sind.

Der Abstandshalter, insbesondere diejenigen aus Kunststoff, können gegebenenfalls ein oder mehrere Additive enthalten, die für solche Materialien üblich sind, z.B. Trockenmittel, farbgebende Mittel, z.B. Pigmente oder Farbstoffe, Verstärkungsmaterialien, Füllstoffe, Lichtschutzmittel, Stabilisatoren, Trennmittel und dergleichen. Trockenmittel können in Hohlräumen oder Aussparungen des Abstandhalters oder in der Kunststoffmatrix des Abstandhalters enthalten sein. Andere Additive sind gewöhnlich in der Kunststoffmatrix des Abstandhalters enthalten. Beispiele für geeignete Trockenmittel sind Kieselgele, Molekularsiebe, CaCl₂, Na₂SO₄, Aktivkohle, Silikate, Bentonite, Zeolithe und/oder Gemische davon.

Der Abstandhalter kann transparent sein, in einer bevorzugten Ausführungsform ist er aber nicht transparent, d.h. undurchsichtig. Übliche Farben für den Abstandhalter sind z.B. schwarz, weiß, braun, oder grau, insbesondere wenn es sich um einen Abstandhalter aus Kunststoff handelt. Bei einem Abstandhalter aus Metall ergibt sich die Farbe gewöhnlich aus dem eingesetzten Material.

Die Scheiben der Isolierverglasung können aus organischem Glas oder vorzugsweise aus anorganischem Glas sein. In einer vorteilhaften Ausgestaltung der erfindungsgemäßen Isolierverglasung können die Scheiben unabhängig voneinander aus Flachglas, Floatglas, Kalk-Natron-Glas, Quarzglas oder Borosilikatglas sein. Die Dicke jeder Scheibe kann variieren und so den Erfordernissen des Einzelfalls angepasst werden. Vorzugsweise werden Scheiben mit Standardstärken von 1 mm bis 19 mm und bevorzugt von 2 mm bis 8 mm verwendet. Die Scheiben können farblos oder gefärbt sein. Zumindest eine Scheibe kann als Strukturglas ausgebildet sein.

Die Scheiben der Isolierverglasung sind insbesondere Isolierglasscheiben, Verbundscheiben oder Einzelglasscheiben. Eine Verbundscheibe kann mindestens zwei Scheiben umfassen, die über eine Zwischenschicht miteinander verbunden sind. Die Zwischenschicht kann vorzugsweise ein thermoplastischer Kunststoff wie Polyvinylbutyral (PVB), Ethylenvinylacetat (EVA), Polyurethan (PU) oder mehrere Schichten davon, bevorzugt mit Dicken von 0,3 mm bis 0,9 mm, sein.

Die Isolierverglasung umfasst bevorzugt mindestens eine Scheibe, bevorzugter mindestens zwei Scheiben, die unabhängig voneinander eine Floatglasscheibe, eine Verbundscheibe, Strukturglas oder ein gefärbtes oder satiniertes Glas ist bzw. sind. Bevorzugter ist mindestens eine Scheibe eine Floatglasscheibe.

Die Isolierverglasung umfasst mindestens eine Scheibe, die auf der Seite, die dem oder einem Verglasungsinnenraum zugewandt ist, zumindest teilweise mit einer elektrisch leitfähigen Beschichtung und/oder einem elektrisch leitfähigen Funktionselement versehen ist. Bei der elektrisch leitfähigen Beschichtung kann es sich gegebenenfalls um eine elektrisch schaltbare Beschichtung handeln. Bei dem elektrisch leitfähigen Funktionselement kann es sich gegebenenfalls um ein elektrisch schaltbares Funktionselement handeln.

Die elektrisch leitfähige Beschichtung oder das elektrisch leitfähige Funktionselement ist in der Regel an einer Innenseite von einer der beiden äußeren Scheiben oder, falls vorhanden, an einer der Seiten einer inneren Scheibe vorgesehen, wobei die elektrisch leitfähige Beschichtung oder das elektrisch leitfähige Funktionselement bevorzugt an einer Innenseite einer äußeren Scheibe aufgebracht ist. In einer bevorzugten Ausführungsform ist die äußere Scheibe, an deren Innenseite die elektrisch leitfähige Beschichtung oder das elektrisch leitfähige Funktionselement angebracht ist, die äußere Scheibe, die im eingebauten Zustand nach außen zeigt, wobei die äußere Scheibe vorzugsweise ein Verbundglas aus mindestens zwei Einzelgläsern ist.

Eine derartige elektrisch leitfähige Beschichtung oder ein solches elektrisch leitfähiges Funktionselement kann z.B. als Beleuchtung, Heizung oder Antenne fungieren oder in einer elektrisch schaltbaren Verglasung wie Displays oder elektrochromen Verglasung verwendet werden. Eine derartige Beschichtung oder ein solches Funktionselement kann z.B. auch für ein Alarmglas zur Einbruchmeldung oder ein Glas zum Schutz vor elektromagnetischer Strahlung geeignet sein.

Die elektrisch leitfähige Beschichtung oder das elektrisch leitfähige Funktionselement sind bevorzugt eine elektrochrome Beschichtung, eine transparente, elektrisch leitfähige Beschichtung oder ein oder mehrere Photovoltaikelemente wie Solarzellen zur elektrischen Stromerzeugung, wobei eine elektrochrome Beschichtung besonders bevorzugt ist.

Die elektrochrome Beschichtung umfasst bevorzugt zumindest zwei Elektrodenschichten und zwei zwischen den beiden Elektrodenschichten befindliche, elektrochemisch aktive Schichten, die durch eine Elektrolytschicht voneinander getrennt sind. Die beiden aktiven Schichten sind jeweils in der Lage, kleine Ionen reversibel einzulagern, wobei zumindest eine der beiden Schichten aus einem elektrochromen Material besteht, das über verschiedene Oxidationszustände verfügt, die dem ein- bzw. ausgelagerten Zustand der Ionen entsprechen und eine unterschiedliche Färbung haben. Durch Anlegen von elektrischen Spannungen verschiedener Polarität kann die Ein- bzw. Auslagerung der Ionen gesteuert werden, um dadurch gezielt Einfluss auf die optische Transmission der Beschichtung zu nehmen.

Die transparente, elektrisch leitfähige Beschichtung kann für elektromagnetische Strahlung, vorzugsweise elektromagnetische Strahlung einer Wellenlänge von 300 nm bis 1.300 nm, insbesondere für sichtbares Licht von 390 nm bis 780 nm, durchlässig sein. "Durchlässig" bedeutet, dass die Gesamttransmission der Scheibe insbesondere für sichtbares Licht bevorzugt >70% und insbesondere >75% durchlässig ist.

Die transparente, elektrisch leitfähige Beschichtung ist bevorzugt eine funktionelle Beschichtung, bevorzugter eine Beschichtung mit Sonnenschutzwirkung. Eine Beschichtung mit Sonnenschutzwirkung weist reflektierende Eigenschaften im Infrarot-Bereich auf. Die transparente, elektrisch leitfähige Beschichtung kann besonders niedrige Emissivitäten (Low-E) aufweisen. Dadurch wird ein Aufheizen des Innenraums eines Gebäudes infolge von Sonnenstrahlung vorteilhaft vermindert. Scheiben, die mit einer solchen transparenten, elektrisch leitfähigen Beschichtung versehen sind, sind handelsüblich und werden als Low-E-Glas (Low-Emissivity-Glas) bezeichnet.

Solche Beschichtungen enthalten typischerweise zumindest ein Metall, insbesondere Silber oder eine silberhaltige Legierung. Die transparente, elektrisch leitfähige Beschichtung kann eine Abfolge mehrerer Einzelschichten umfassen, insbesondere zumindest eine metallische Schicht und dielektrische Schichten, die beispielsweise zumindest ein Metalloxid enthalten. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten.

Besonders geeignete transparente, elektrisch leitfähige Beschichtungen enthalten mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, SnO2:F), Antimon-dotiertes Zinnoxid (ATO, SnO2:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzochinon, Gemische und/oder Copolymere davon.

Die transparente, elektrisch leitfähige Beschichtung weist bevorzugt eine Schichtdicke von 10 nm bis 5 µm und besonders bevorzugt von 30 nm bis 1 µm auf. Der Flächenwiderstand der transparenten, elektrisch leitfähigen Beschichtung beträgt z.B. 0,35 Ohm/Quadrat bis 200 Ohm/Quadrat, bevorzugt 0,6 Ohm/Quadrat bis 30 Ohm/Quadrat und insbesondere von 2 Ohm/Quadrat bis 20 Ohm/Quadrat.

Die Isolierverglasung umfasst mindestens zwei Sammelleiter, die auf der elektrisch leitfähigen Beschichtung und/oder auf dem elektrisch leitfähigen Funktionselement angeordnet sind und damit im elektrischen Kontakt stehen. Der Sammelleiter wird auch als Sammelschiene oder als "bus bar" bezeichnet.

Die elektrisch leitfähige Beschichtung, insbesondere die elektrochromen Beschichtung, oder das elektrisch leitfähige Funktionselement sind so mit den mindestens zwei Sammelleitern elektrisch verbunden. In der Regel sind auf der elektrisch leitfähigen Beschichtung oder auf dem elektrisch leitfähigen Funktionselement zwei Sammelleiter vorgesehen.

In der erfindungsgemäßen Isolierverglasung ist eine Scheibenkontaktfläche eines Abstandshalters über ein Dichtmittel mit einer Scheibe verbunden und die andere Scheibenkontaktfläche des Abstandshalters ist über ein Dichtmittel mit einer anderen Scheibe verbunden. Auf diese Weise wird mindestens ein Verglasungsinnenraum und mindestens ein Verglasungsaußenraum gebildet.

Der Verglasungsinnenraum wird durch die beiden Scheiben, den Abstandshalter und das zwischen Scheibe und Scheibenkontaktfläche platzierte Dichtmittel umgrenzt und stellt einen abgeschlossenen Hohlraum dar. Der Verglasungsinnenraum kann mit Luft oder einem anderen Gas, insbesondere einem Edelgas, wie z.B. Argon oder Krypton, gefüllt sein. Bei Einsatz eines Abstandshalters, der drei Scheiben voneinander beabstandet, wie vorstehend beschrieben, werden zwei Verglasungsinnenräume gebildet, einer zwischen einer äußeren Scheibe und der inneren Scheibe und einer zwischen der anderen äußeren Scheibe und der inneren Scheibe. Die Verglasungsinnenraumfläche des Abstandhalters ist dem Verglasungsinnenraum zugewandt.

Der Verglasungsaußenraum wird ebenfalls durch die beiden Scheiben, den Abstandshalter und das zwischen Scheibe und Scheibenkontaktfläche platzierte Dichtmittel gebildet und befindet sich gegenüber dem Verglasungsinnenraum im äußeren Randbereich der Isolierverglasung. Der Verglasungsaußenraum ist auf der dem Abstandshalter gegenüberliegenden Seite offen. Die Außenfläche des Abstandhalters ist dem Verglasungsaußenraum zugewandt.

Die Scheiben, das zwischen Scheibe und Scheibenkontaktfläche platzierte Dichtmittel und der Abstandshalter grenzen den Verglasungsinnenraum von dem Verglasungsaußenraum ab und gehören weder zum Verglasungsinnenraum noch zum Verglasungsaußenraum.

Das Dichtmittel zur Verbindung der Seitenkontaktfläche des Abstandshalters und der Scheibe dient einerseits zur Verklebung des Abstandshalters mit der Scheibe und andererseits zur Versiegelung des Spalts zwischen Abstandshalter und Scheibe. Geeignete Dichtmittel basieren z.B. auf Butylkautschuk, Polyisobutylen (PIB), Polyethylenvinylalkohol, Ethylenvinylacetat, Polyolefin-Kautschuk, Copolymeren und/oder Gemischen davon.

Die elektrisch leitfähige Beschichtung und/oder das elektrisch leitfähige Funktionselement kann im Bereich des Verglasungsinnenraums vollflächig oder teilflächig auf der Scheibe angeordnet sein.

Entsprechend der Position der elektrisch leitfähigen Beschichtung oder des elektrisch leitfähigen Funktionselements sind die mindestens zwei Sammelleiter allgemein mit einer Innenseite von einer der beiden äußeren Scheiben oder, falls vorhanden, mit einer der Seiten einer inneren Scheibe verbunden, wobei die Sammeleiter bevorzugt mit einer Innenseite einer äußeren Scheibe verbunden sind. Im eingebauten Zustand der Isolierverglasung kann es sich dabei um die äußere Scheibe handeln, die dem Innenraum zugewandt ist, oder um die äußere Scheibe, die dem Innenraum weggewandt ist.

In der erfindungsgemäßen Isolierverglasung ist in dem mindestens einen Verglasungsaußenraum im Allgemeinen wie üblich eine äußere Abdichtung eingebracht. Die äußere Abdichtung kann unmittelbar an die Außenfläche des Abstandhalters grenzen oder über ein Dichtmittel damit verbunden sein. Als dazwischenliegendes Dichtmittel eignen sich z.B. die vorstehend beschriebenen Dichtmittel. Die äußere Abdichtung füllt gewöhnlich den Verglasungsaußenraum in seiner gesamten Breite zwischen den Scheiben aus.

Die äußere Abdichtung enthält bevorzugt ein Polymer oder ein silanmodifiziertes Polymer, besonders bevorzugt organische Polysulfide, Silikone, Silikonkautschuk, der raumtemperaturvernetzt, hochtemperaturvernetzt, peroxidisch vernetzt und/oder additionsvernetzt sein kann, Polyurethane und/oder Butylkautschuk. Derartige Stoffe haben eine sehr gute Haftung auf Glas, sodass die äußere Abdichtung vor allem der Verklebung der Scheiben dient und zur mechanischen Stabilität der Isolierverglasung beiträgt. In einer optionalen Ausgestaltung können auch Zusätze zur Erhöhung der Alterungsbeständigkeit, beispielsweise UV Stabilisatoren, enthalten sein.

Die Isolierverglasung kann eine undurchsichtige Beschichtung, die im Randbereich einer Scheibe aufgebracht ist, bevorzugt auf einer äußeren Seite der ersten Scheibe, umfassen. Die undurchsichtige Beschichtung dient als flächiges Sichtschutzelement, das im Randbereich einer Scheibe aufgebracht ist. Die undurchsichtige Beschichtung kann auch umlaufend auf dem Randbereich der Scheibe ausgebildet sein.

Die erfindungsgemäße Isolierverglasung eignet sich insbesondere als Gebäudeinnenverglasung, Gebäudeaußenverglasung oder Fassadenverglasung. Die Erfindung betrifft daher auch die Verwendung der erfindungsgemäßen Isolierverglasung als Gebäudeinnenverglasung, Gebäudeaußenverglasung oder Fassadenverglasung.

Ein weiter Aspekt der Erfindung betrifft ein Verfahren zum Verlöten eines erfindungsgemäßen Anschlusselements mit einem erfindungsgemäßen Sammelleiter (dies entspricht der Herstellung eines erfindungsgemäßen Anschlusssystems), wobei
a) mindestens ein erfindungsgemäßer Sammelleiter mit einer elektrisch leitfähigen Haftschicht, einer Leiterbahn und einer opaken, elektrisch isolierenden Abdeckung bereitgestellt wird,
b) die Abdeckung des Sammelleiters in einem zu verlötenden Bereich entfernt wird und ein zu verlötender Abschnitt der Leiterbahn des Sammelleiters freigelegt wird,
c) die erste Klebeschicht des erfindungsgemäßen Anschlusselements derart am Sammelleiter angeordnet wird, dass sich das erste Lotdepot unmittelbar über oder im Kontakt mit dem freigelegten Abschnitt des Sammelleiters befindet,
d) mindestens ein Lötelement an die zweite Seite der Trägerfolie und im Wesentlichen deckungsgleich zu dem ersten Lotdepot angelegt und das erste Lotdepot erhitzt wird, so dass eine Lötverbindung zwischen Flachleiter und Sammelleiter gebildet wird.

Das erfindungsgemäße Verfahren zum Verlöten eines erfindungsgemäßen Anschlusselements mit einem erfindungsgemäßen Sammelleiter wird bevorzugt in der oben angegebenen Reihenfolge durchgeführt.

Der Lötvorgang in Schritt d) erfolgt bevorzugt durch eine Vorrichtung zum Thermodenlöten oder zum Verlöten nach dem Hot-Stamp-Verfahren. Dabei wird ein erhitztes Lötelement (auch Lötspitze oder Lötstempel genannt) an die Lötstelle herangeführt und das Lotdepot unter Einwirkung einer kontrollierten Temperatur und eines kontrollierten Anpressdrucks aufgeschmolzen. Alternativ kann das Lötelement auch erst nach Kontakt mit dem Lotdepot auf die entsprechende Temperatur gebracht. Des Weiteren können die Temperatur und der Anpressdruck auch kontinuierlich oder schrittweise variiert werden oder gepulst geführt werden.

Beim erfindungsgemäßen Verfahren ist wichtig, dass das Lötelement nur über die Trägerfolie das den darunterliegenden Flachleiter, das Lotdepot und die Leiterbahn des Sammelleiters erwärmt. D.h. das Lötelement ist nicht in unmittelbarem Kontakt zum Flachleiter, Lotdepot oder Leiterbahn des Sammelleiters. Dies ermöglicht eine besonders schonende und kontrollierte Erwärmung. Des Weiteren ist die Lötstelle nach dem Verlöten nicht von außen sichtbar, sondern bereits durch die opake Trägerfolie verdeckt, so dass die Lötstelle nicht sichtbar und gut kaschiert ist, was den optischen ästhetischen Eindruck verbessert.

Die elektrisch leitfähige Haftschicht enthält bevorzugt einen wärmeaktivierbaren Kleber.

Die Abdeckung des Sammelleiters kann durch alles geeigneten Methoden erfolgen, beispielsweise durch mechanisches Abtragen oder Laserablation.

In einer vorteilhaften Ausführungsform des erfindungsgemäßen Verfahrens wird die Temperatur der Lötspitze derart gewählt, dass die Haftschicht des Sammelleiters unterhalb der Stelle der Lötverbindung (kurz Lötstelle) auf eine maximale Temperatur von kleiner 300°C, bevorzugt kleiner 250°C und insbesondere von kleiner oder gleich 230°C erwärmt wird.

Bevorzugt ist es, wenn eine maximale Temperatur an dem Lötelement von kleiner oder gleich 450°C, bevorzugt kleiner oder gleich 410°C und insbesondere kleiner oder gleich 350°C verwendet wird.

Flachleiter und Sammelleiter, und insbesondere eine erfindungsgemäße Zinn-Kupferfolie als Leiterbahn im Flachleiter und im Sammelleiter, leiten die Wärme der Lötspitze ab. Eine geeignete Lötspitzen-Temperatur hängt unter anderem von Material und Dicke des Flachleiters und des Sammelleiters sowie Material, Dicke und Färbung der Trägerfolie und der anderen Folien und Schichten in der Umgebung der Lötverbindung ab und können im Rahmen einfacher Experimente ermittelt werden.

Ein weiterer Aspekt der Erfindung umfasst ein Verfahren zur Herstellung einer erfindungsgemäßen Isolierverglasung, wobei zumindest
e) die Verfahrensschritte a) bis d) gemäß dem erfindungsgemäßen Verfahren zum Verlöten eines Anschlusselements durchgeführt werden,
f) ein Abstandshalter auf die erste Scheibe aufgelegt wird, wobei der Verbindungsbereich des Anschlusselements zwischen einer Seitenfläche des Abstandshalters und der ersten Scheibe angeordnet wird,
g) das Anschlusselement über die zweite Klebeschicht auf der zweiten Seite der Trägerfolie mit der Außenfläche des Abstandshalters verklebt wird, und
h) zumindest jeweils eine externe Zuleitung im zweiten Anschlussbereich mit dem Flachleiter des Anschlusselements verlötet wird.

Das erfindungsgemäße Verfahren zur Herstellung einer erfindungsgemäßen Isolierverglasung wird bevorzugt in der oben angegebenen Reihenfolge durchgeführt.

In einer vorteilhaften Ausführungsform des erfindungsgemäßen Verfahrens zur Herstellung einer erfindungsgemäßen Isolierverglasung umfasst das Verfahren das Anordnen und Verbinden einer zweiten Scheibe mit der zweiten Seitenfläche des Abstandshalters, bevorzugt zwischen den Schritten f) und g) oder zwischen den Schritten g) und h).

In einer weiteren vorteilhaften Ausführungsform wird nach Schritt h) die Isolierverglasung mit einer Abdichtung im Verglasungsaußenraum abgedichtet.

Ein weiterer Aspekt der Erfindung umfasst die Verwendung eines erfindungsgemäßen Anschlusselements oder des erfindungsgemäßen Verfahrens zum Verlöten eines erfindungsgemäßen Anschlusselements zur elektrischen Kontaktierung eines Sammelleiters, der mittels eines elektrisch leitfähigen, wärmeaktivierbaren Klebers auf eine elektrisch leitfähige Beschichtung und/oder ein elektrisch steuerbares Funktionselement aufgeklebt und elektrisch leitend verbunden ist.

Im Folgenden wird die Erfindung anhand von Figuren und Ausführungsbeispielen näher erläutert. Die Figuren sind eine schematische Darstellung und nicht maßstabsgetreu. Die Figuren schränken die Erfindung in keiner Weise ein.

Es zeigen:
- Figur 1A: eine schematische Draufsicht auf die Rückseite eines erfindungsgemäßen Anschlusselements,
- Figur 1B: eine schematische Draufsicht auf die Vorderseite des erfindungsgemäßen Anschlusselements aus Figur 1A,
- Figur 1C: einen schematischen Querschnitt des zweiten Anschlussbereichs des erfindungsgemäßen Anschlusselements aus Figur 1A entlang der Schnittlinie A-A',
- Figur 1D: einen schematischen Querschnitt des ersten Anschlussbereichs des erfindungsgemäßen Anschlusselements aus Figur 1A entlang der Schnittlinie B-B',
- Figur 2A: einen Ausschnitt einer erfindungsgemäßen Isolierverglasung im Querschnitt,
- Figur 2B: eine vergrößerte schematische Querschnittsdarstellung des ersten Anschlussbereichs nach Figur 2A,
- Figur 2C: eine vergrößerte schematische Querschnittsdarstellung des zweiten Anschlussbereichs nach Figur 2A,
- Figur 2D: einen schematischen Querschnitt eines elektrisch leitfähigen Klebebandes mit einer Abdeckung,
- Figur 2E: einen schematischen Querschnitt eines elektrisch steuerbaren Funktionselements,
- Figur 3A: schematische Darstellung eines erfindungsgemäßen Verfahrens zum Verlöten eines erfindungsgemäßen Anschlusselements,
- Figur 3B: schematische Darstellung eines erfindungsgemäßen Verfahrens zur Herstellung einer erfindungsgemäßen Isolierverglasung,
- Figur 4A: eine perspektivische Darstellung auf die Rückseite eines weiteren erfindungsgemäßen Anschlusselements, und
- Figur 4B: eine perspektivische Draufsicht auf die Vorderseite des erfindungsgemäßen Anschlusselements aus Figur 4A.

Angaben mit Zahlenwerten sind in aller Regel nicht als exakte Werte zu verstehen, sondern beinhalten auch eine Toleranz von +/- 1 % bis zu +/- 10 %.

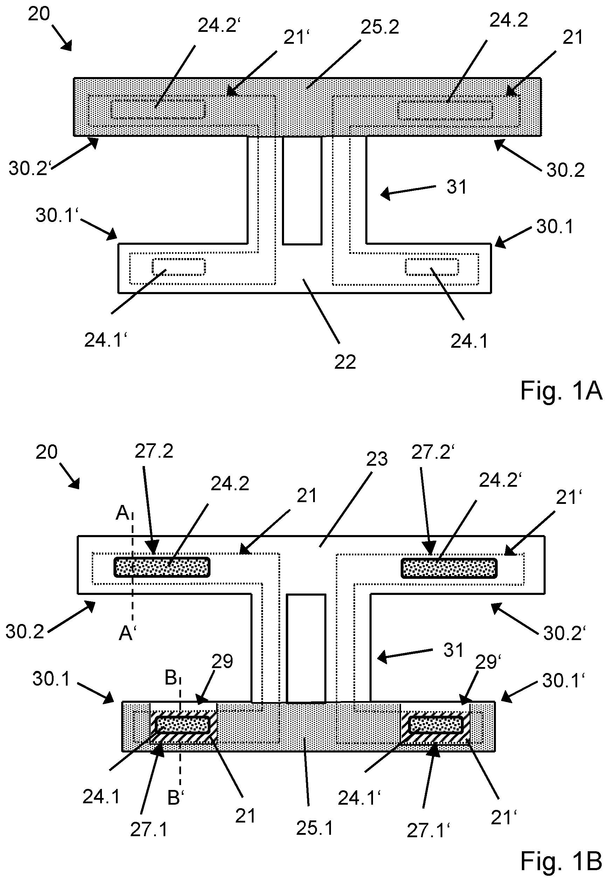

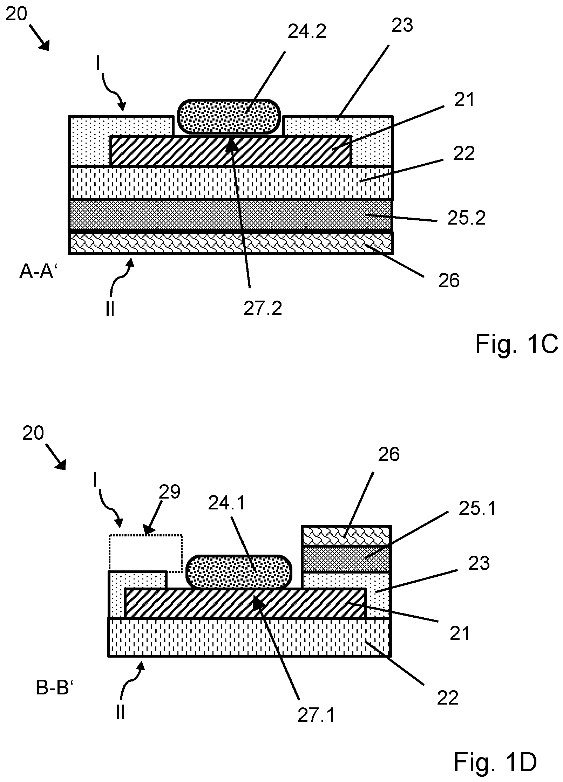

Die Figuren 1A-D zeigen verschiedene Ansichten und Schnitte eines erfindungsgemäßen Anschlusselements 20. Figur 1A zeigt eine schematische Draufsicht auf die zweite Seite II des Anschlusselements 20, d.h. auf die den Lötverbindungen und Lotdepots 24.1, 24.1', 24.2, 24.2' abgewandten Seite. Die zweite Seite II des Anschlusselements 20 wird daher auch Rückseite oder Abdeckseite genannt. Figur 1B zeigt eine schematische Draufsicht auf die erste Seite I des erfindungsgemäßen Anschlusselements aus Figur 1A, d.h. auf die Seite mit den Lotdepots 24.1, 24.1', 24.2, 24.2' zur Ausbildung der Lötverbindungen. Die erste Seite I des Anschlusselements 20 wird daher auch Vorderseite oder Anschlussseite genannt.

Figur 1C zeigt einen schematischen Querschnitt des zweiten Anschlussbereichs 27.2 des erfindungsgemäßen Anschlusselements 20 aus Figur 1A entlang der Schnittlinie A-A'. Figur 1D zeigt einen schematischen Querschnitt des ersten Anschlussbereichs 27.1 des erfindungsgemäßen Anschlusselements 20 aus Figur 1A entlang der Schnittlinie B-B'.

Das hier dargestellte Anschlusselement 20 ist beispielsweise zur Kontaktierung einer elektrisch leitfähigen Beschichtung und/oder einem elektrisch steuerbaren Funktionselement wie einer elektrochromen Verglasung in einer Isolierverglasung geeignet.

Das Anschlusselement 20 weist eine elektrisch isolierende Trägerfolie 22 auf. Die Trägerfolie 22 ist hinreichend dünn und flexibel ausgebildet, dass sie sich den Gegebenheiten des Untergrunds anpassen, geringe Höhenunterschiede ausgleichen kann und insbesondere im Bereich des Verbindungsstegs 31 gekrümmt oder geknickt werden kann, beispielsweise bis zu 90° aus der Erstreckungsrichtung heraus.

Auf der ersten Seite I der Trägerfolie 22 sind im dargestellten Beispiel zwei Flachleiter 21, 21' angeordnet. Die Flachleiter 21, 21' sind elektrisch voneinander isoliert, so dass das Anschlusselement 20 eine zweipolige Verbindung ermöglicht.

Im dargestellten Beispiel weist die Trägerfolie 22 eine Doppel-T-Kontur auf. Das bedeutet, dass die Trägerfolie 22 jeweils zwei streifenförmig ausgebildete Schenkelpaare 30.1, 30.1' und 30.2,30.2' aufweist, die jeweils Streifen ausbilden, wobei beide Streifen parallel zueinander verlaufen. Die Schenkelpaare 30.1,30.1' und 30.2,30.2' sind über einen mittig und orthogonal verlaufenden Verbindungsbereich 31 miteinander verbunden. Der Verbindungsbereich 31 weist hier beispielsweise eine optionale rechteckförmige Ausnehmung auf, die zwischen den Flachleitern 21, 21' angeordnet ist.

Am Verbindungsbereich 31 kann ein hier nicht dargestelltes Dichtelement, beispielsweise ein rechteckförmiger Streifen aus Polyisobutylen auf einer Seite der Trägerfolie 22 angeordnet sein. Es versteht sich, dass auch beispielsweise zwei Streifen auf beiden Seiten der Trägerfolie 22 angeordnet sein können.

Die Flachleiter 21, 21' sind hier vollständig auf der Trägerfolie 22 angeordnet. Jeder der Flachleiter 21, 21' weist an seinen Enden einen ersten Anschlussbereich 27.1, 27.1' und am entgegengesetzten Ende einen zweiten Anschlussbereich 27.2, 27.2' auf. Der jeweils erste Anschlussbereich 27.1, 27.1' ist über Flachleiter 21, 21' mit dem jeweiligen zweiten Anschlussbereich 27.2, 27.2' elektrisch leitend verbunden.

Die Anschlussbereiche sind hier auf den Schenkeln der Doppel-T-Struktur angeordnet. So befindet sich der erste Anschlussbereich 27.1 des Flachleiters 21 auf dem Schenkel 30.1, der erste Anschlussbereich 27.1' des Flachleiters 21' auf dem Schenkel 30.1', der zweite Anschlussbereich 27.2 des Flachleiters 21 auf dem Schenkel 30.2 und der zweite Anschlussbereich 27.2' des Flachleiters 21' auf dem Schenkel 30.2'.

Die Flachleiter 21, 21' weisen an ihren ersten Anschlussbereichen 27.1, 27.1' beispielsweise jeweils ein erstes Lotdepot 24.1, 24.1' auf. Des Weiteren weisen die Flachleiter 21, 21' an ihren zweiten Anschlussbereichen 27.2, 27.2' ebenfalls beispielsweise jeweils ein zweites Lotdepot 24.2, 24.2' auf. Es versteht sich, dass einer oder jeder Flachleiter 21, 21' auch zwei oder mehr Anschlussbereiche und/oder zwei oder mehr Lotdepots an ihren jeweiligen Anschlussbereichen aufweisen können, beispielsweise um eine Redundanz in der Kontaktierung zu erzeugen und dadurch Ausfallsraten zu reduzieren.

Weiterhin ist eine erste Klebeschicht 25.1 an den ersten Schenkeln 30.1, 30.1' auf der ersten Seite I der Trägerfolie 22 angeordnet. Es versteht sich, dass die erste Klebeschicht 25.1 zumindest Aussparungen im Bereich der ersten Lotdepots 24.1, 24.1' aufweist.

Im dargestellten Beispiel weist die erste Klebeschicht 25.1 zwei weitere Aussparungen 29. 29' auf, die sich über den jeweiligen Flachleiter 21, 21' hinweg bis zum Rand der Trägerfolie 22 erstrecken.

Die Aussparungen 29, 29' haben den besonderen Vorteil, dass Lot aus den Lotdepots 24.1, 24.1' während des Lötvorgangs in den Bereich der Aussparung 29, 29' ausweichen kann, so dass sich eine optimale Dicke der Lötverbindung einstellen kann. Des Weiteren können Ausgasungen aus dem Lot, der Kleber oder des zu verlötenden Sammelleiters ausweichen und in unkritische Bereiche, insbesondere in optisch nicht oder wenig einsehbare Bereiche, abfließen. Diese Ausgasungen können teilweise sehr aggressiv sein und die empfindlichen Schichten einer elektrisch leitfähigen Beschichtung oder eines elektrisch steuerbaren Funktionselements zerstören oder deren optisches Erscheinungsbild beeinträchtigen.

Des Weiteren weist die Trägerfolie 22 auf ihre zweiten Seite II eine zweite Klebeschicht 25.2 auf den Schenkeln 30.2, 30.2' auf. Die zweite Klebeschicht 25.2 ist dabei überdeckend zu den zweiten Anschlussbereichen 27.2, 27.2' auf der ersten Seite I der Trägerfolie 22 angeordnet. Das Anschlusselement 20 kann über die zweite Klebeschicht 25.2 bei der Verwendung an einer Oberfläche, beispielsweise einer Außenfläche eines Abstandshalters einer Isolierverglasung befestigt werden, so dass eine einfache Verlötung des zweiten Anschlussbereichs 27.2, 27.2' ermöglicht wird.

Der Flachleiter 21 besteht beispielsweise aus einer Metallfolie, beispielsweise aus einer 100 µm dicken Folie aus verzinntem Kupfer.

Die Trägerfolie 22 ist beispielsweise schwarz opak und elektrisch isolierend ausgebildet. Sie besteht aus einer Polymerfolie, beispielsweise aus einer 150 µm dicken Folie aus Polyimid. Die Flachleiter 21, 21' sind fest mit der Trägerfolie 22 verbunden, beispielsweise durch aufkleben oder unmittelbares Abscheiden der Metallfolie auf der Trägerfolie 22. Durch die schwarze Färbung wird eine Durchsicht auf die Flachleiter 21, 21' und Reflektionen an deren metallischen Oberflächen und die Lötstellen sowie darunterliegende Strukturen vermieden und kaschiert.

Im dargestellten Beispiel ist eine Abdeckfolie 23 auf der ersten Seite I der Trägerfolie 22 und auf dem Flachleiter 21 angeordnet. Die Abdeckfolie 23 ist elektrisch isolierend und besteht beispielsweise aus einer 25 µm dicken Polyimid-Folie. Die Abdeckfolie 23 ist beispielsweise schwarz und opak um die Durchsicht auf die Flachleiter 21, 21' und Reflektionen an deren metallischen Oberflächen zu kaschieren. Es versteht sich, dass auch andere Farben verwendet werden können, beispielsweise um ein besonders ästhetisches Erscheinungsbild zu erzielen. Im Bereich der ersten Klebeschicht 25.1 ist die Abdeckfolie 23 zwischen Klebeschicht 25.1 und Trägerfolie 22 mit Flachleitern 21, 21' angeordnet.

Im dargestellten Beispiel weisen die einzelnen Schenkel 30.1, 30.1' der Trägerfolie 22 im Bereich der ersten Anschlussbereiche 27.1, 27.1' eine Breite von etwa 3 mm auf. Die Länge der beiden Schenkel 30.1, 30.1' zusammen beträgt etwa 40 mm auf. Die einzelnen Schenkel 30.2, 30.2' der Trägerfolie 22 im Bereich der zweiten Anschlussbereiche 27.2, 27.2' weisen eine Breite von etwa 4 mm auf. Die Länge der beiden Schenkel 30.2, 30.2' zusammen beträgt etwa 60 mm auf. Die Länge des Verbindungsbereich 31, also der Abstand der Schenkel 30.1, 30.1' von den Schenkeln 30.2, 30.2' beträgt etwa 14 mm.

Im dargestellten Beispiel sind die Flachleiter 21, 21' vollständig auf der Trägerfolie 22 angeordnet, wobei die Trägerfolie 22 einen Überstand zum Flachleiter 21.21' von etwa 0,5 mm ausweist. D.h. die Flachleiter21, 21' haben auf den Schenkeln 30.1, 30.1' eine Breite von etwa 2 mm und auf den Schenkeln 30.2, 30.2' eine Breite von etwa 3 mm.

Die Lotdepots sind hier beispielsweise streifenförmig ausgebildet. Die ersten Lotdepots 24.1, 24.1' haben beispielsweise eine Länge von etwa 14 mm (entlang der Erstreckungsrichtung, also entlang der Längsrichtung der Schenkel) und eine Breite von etwa 0,8 mm. Die zweiten Lotdepots 24.2, 24.2' haben beispielsweise eine Länge von etwa 10 mm (entlang der Erstreckungsrichtung, also entlang der Längsrichtung der Schenkel) und eine Breite von etwa 2 mm. Die Lotdepots bestehen aus einem Lot mit einer Zusammensetzung von 96.5% Sn / 3% Ag / 0.5% Cu und einer typischen Löttemperatur von etwa 250°C.

Es versteht sich, dass die Dimensionen der Trägerfolie, ggf. der Abdeckfolie und der Flachleiter den jeweiligen Gegebenheiten der jeweiligen Anordnung angepasst sein können. Bevorzugt wird die Breite der Trägerfolie und insbesondere der Flachleiter auf die Breite der Sammelleiter und insbesondere deren Leiterbahn abgestimmt. Die Länge der Trägerfolie und der Flachleiter können beispielsweise an den zu überbrückenden Abstand zwischen den Sammelleitern und die Länge des Verbindungsbereichs an den Abstand der Sammelleiter zu der Außenfläche des Abstandshalters bei einer erfindungsgemäßen Isolierverglasung angepasst werden.

In den Figuren 1C und 1D ist eine Schutzfolie 26 auf den Klebeschichten 25.1, 25.2 angeordnet. Diese auch als Liner bezeichnet Schutzfolie 26 schützt die Klebeschichten 25.1, 25.2 vor der Montage und wird kurz vor der Verklebung abgezogen.

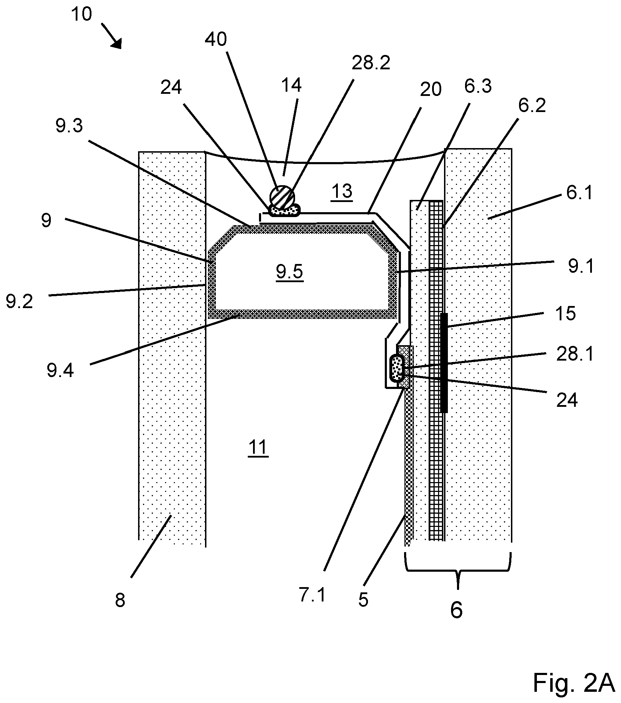

Figur 2A zeigt einen vereinfachten Ausschnitt einer erfindungsgemäßen Isolierverglasung 10 im Querschnitt. Die Isolierverglasung 10 umfasst eine erste Scheibe 6 und eine zweite Scheibe 8, die über einen Abstandshalter 9 verbunden sind. Der Abstandshalter 9 ist zwischen der ersten Scheibe 6 und der parallel dazu angeordneten zweiten Scheibe 8 angebracht. Der Abstandshalter 9 weist eine erste Scheibenkontaktfläche 9.1, eine zweite Scheibenkontaktfläche 9.2, die parallel zur ersten Scheibenkontaktfläche 9.1 verläuft, eine Außenfläche 9.3 und eine Verglasungsinnenraumfläche 9.4 auf. Die Außenfläche 9.3 ist über eine schrägverlaufende Verbindungsfläche mit den beiden Scheibenkontaktflächen 9.1, 9.2 verbunden. Der Abstandshalter 9 weist einen Hohlraum 9.5 auf, in dem Trockenmittel enthalten sein können.

Ein Verglasungsinnenraum 11 (nicht vollständig gezeigt) wird durch die erste Scheibe 6, die zweite Scheibe 8 und die Verglasungsinnenraumfläche 9.4 des Abstandshalters 9 definiert. Die erste Scheibe 6 ist über ein Dichtmittel mit der ersten Scheibenkontaktfläche 9.1 verbunden und die zweite Scheibe 8 ist über ein Dichtmittel mit der zweiten Scheibenkontaktfläche 9.2 verbunden. Ein Verglasungsaußenraum 13 wird begrenzt durch die erste Scheibe 6, die zweite Scheibe 8 und die Außenfläche 9.3 des Abstandshalters 9 und ist bei einer fertigen Isolierverglasung 10 mit einer äußeren Abdichtung 14 verfüllt.

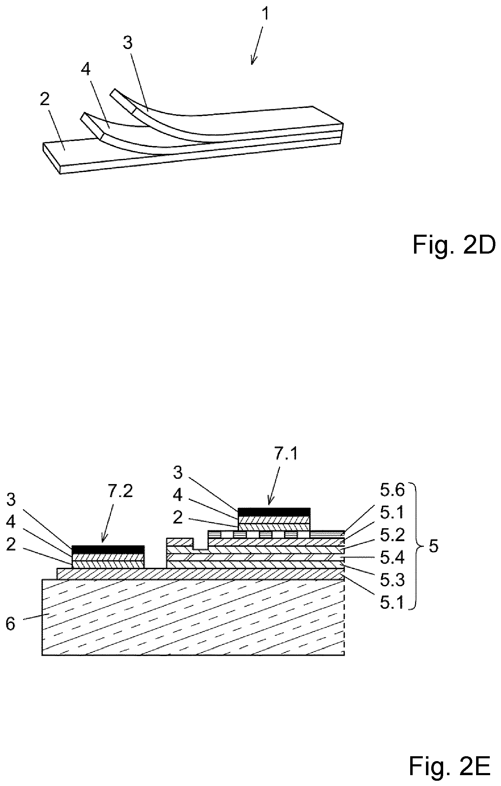

Die erste Scheibe 6 weist auf der innenseitigen Oberfläche beispielsweise ein elektrochromes Funktionselement 5 auf (siehe Figur 2E und dazugehörige Beschreibung). Das Funktionselement 5 erstreckt sich nahezu vollflächig über die innenseitige Oberfläche der ersten Scheibe 6, abzüglich eines Randbereichs vom Scheibenrand der Scheibe. Das Funktionselement 5 wird von dem ersten Sammelleiter 7.1 kontaktiert, der sich im Verglasungsinnenraum 11 befindet. Eine Detaildarstellung der Sammelleiter 7.1, 7.2 findet sich beispielhaft in Figur 2D und der dazugehörigen Beschreibung.

Die erste Scheibe 6 enthält Floatglas in Form von einem Verbundsicherheitsglas (VSG). Das Verbundsicherheitsglas weist zwei Einzelscheiben (6.1 und 6.3) auf, die über eine Zwischenschicht 6.2 miteinander verbunden sind. Bevorzugt handelt es sich um ein VSG aus einer 4 mm (bzw. 5 mm) dicken Scheibe 6.1, die mit einer 2.2 mm dicken sogenannten EC-Scheibe 6.3 (elektrochromes Glas) verbunden ist. Die 4 mm dicke Scheibe 6.1 ist ein Floatglas.

Die EC-Scheibe 6.3 ist innenseitig mit einer undurchsichtigen Beschichtung 15 versehen, bei der es sich um einen schwarzen Siebdruck handelt. Die undurchsichtige Beschichtung 15 ist bandförmig aufgebracht und befindet sich etwa in einem Bereich auf der Höhe vom unteren Ende der Scheibe bis zum oberen Ende des ersten Sammelleiters 7.1. Die undurchsichtige Beschichtung 15 kann etwa 15 mm bis 30 mm (ab Glaskante) breit sein. Die undurchsichtige Beschichtung 15 schränkt den Durchsichtbereich der Isolierverglasung 10 ein und verdeckt den Sammelleiter 7.1 vollständig bei Betrachtung von außen innerhalb eines bestimmten Blickwinkelbereichs.

Der Abstandhalter ist aus Styrol-Acrylnitril (SAN) gebildet, welches undurchsichtig ist. Der Abstand von der Ebene der Verglasungsinnenraumfläche 9.4 zum oberen Ende des Sammelleiters 7.1 beträgt etwa 9 mm. Als Dichtstoff wurde beispielsweise Polyisobutylen und als äußere Abdichtung 14 wurde Silikon verwendet. Der Abstandhalter weist beispielsweise eine Höhe von etwa 6 mm und eine Breite von etwa 15 mm auf. Die Dimensionierung ist selbstverständlich den jeweiligen Erfordernissen anzupassen, z.B. ist die Breite den Erfordernissen an eine gute Wärmedämmung anzupassen.

Die Kontaktierung der Sammelleiter 7.1, 7.2 erfolgt über ein erfindungsgemäßes Anschlusselement 20, wie es in den Figuren 1A-D dargestellt und ausführlich beschrieben ist. Zur Vereinfachung ist hier nur ein Flachleiter 21 samt Anschlussbereichen 27.1, 27.2 eingezeichnet. Der zweite Flachleiter 21' ist hier verdeckt.

Das Anschlusselement 20 ist hier im ersten Anschlussbereich 27.1 über eine Lötstelle 28.1 mit dem ersten Sammelleiter 7.1 der elektrochromen Scheibe 6.3 elektrisch leitend verbunden.

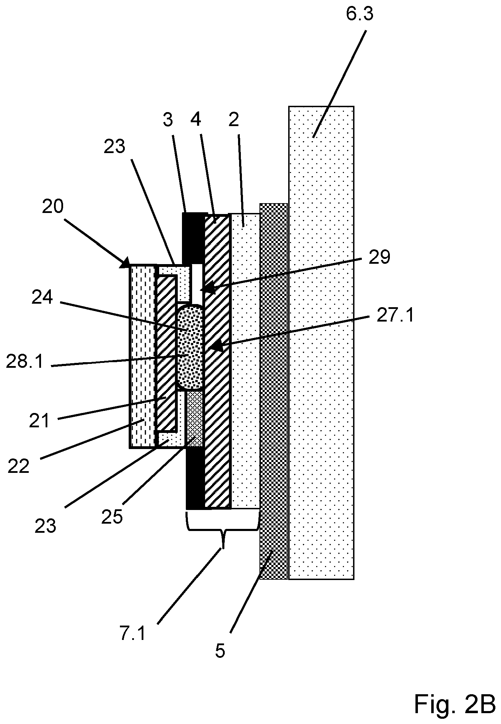

Figur 2B zeigt eine vergrößerte schematische Querschnittsdarstellung des ersten Anschlussbereichs 27.1 nach Figur 2A. Die opake Abdeckung 3 des ersten Sammelleiters 3 wurde hier im Bereich der Lötverbindung 28.1 vor der Verlötung entfernt, beispielsweise durch Laserablation.

Eine unmittelbare Draufsicht auf die Lötstelle 28.1 wir von der Anschlussseite (also von links in der Figur 2A bzw. Figur 2B) durch die opake Trägerfolie 22 verhindert. Die Durchsicht auf die Leiterbahn 4 im ersten Sammelleiter 7.1 wird weiter hin durch die opake Abdeckung 3 verhindert. Eine unmittelbare Draufsicht auf die Lötstelle 28.1 wir von der Scheibenseite (also von rechts) durch die undurchsichtige Beschichtung 15 verhindert. Dadurch entsteht ein sehr unauffälliges Erscheinungsbild der elektrischen Kontaktierung der elektrochromen Scheibe 6.3 in der Isolierverglasung 10

Im dargestellten Beispiels wird das Anschlusselement 20 in Bereich des Verbindungsbereichs 31 zwischen Abstandshalter 9 und Scheibe 6 aus dem Verglasungsinnenraum 11 herausgeführt.

Das Anschlusselement 20 ist im zweiten Anschlussbereich 27.2 über die zweite Klebefläche 25.2 mit der Außenfläche 9.3 des Abstandshalters 9 verbunden.

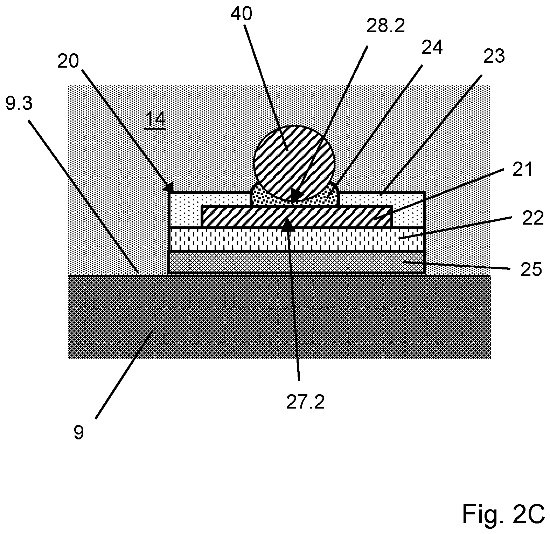

Figur 2C zeigt eine vergrößerte schematische Querschnittsdarstellung des zweiten Anschlussbereichs 27.2 nach Figur 2A. Der Flachleiter 21 ist hier über eine Lötverbindung 28.2 mit einer Zuleitung 40, beispielsweise einem Draht oder mehrlitzigem Kabel, mit einer externen Steuerelektronik zur Steuerung des elektrochromen Funktionselements in der Isolierverglasung 10 verbindbar.

Figur 2D zeigt einen schematischen Querschnitt des elektrischen leitfähigen Klebebandes 1 aus dem die Sammelleiter 7 zur Kontaktierung der elektrochromen Scheibe 6.3 hergestellt sind. Das elektrisch leitfähige Klebeband 1 weist eine elektrisch leitfähige Haftschicht 2 auf. Zwischen der elektrisch leitfähigen Haftschicht 2 und einer Abdeckung 3 befindet sich eine Leiterbahn 4. Die Abdeckung 3 besitzt beispielsweise eine Dicke von etwa 50 µm. Die Leiterbahn 4 umfasst eine bandförmige Schicht aus Kupfer, die beispielsweise verzinnt ist. Die Leiterbahn 4 besitzt beispielsweise eine Dicke von etwa 35 µm. Die elektrisch leitfähige Haftschicht 2 dient zum Ankleben der Leiterbahn 4 auf an eine Scheibe und weist ein elektrisch leitfähiges Material in großer Menge auf. Die elektrisch leitfähige Haftschicht 2 besitzt beispielsweise eine Dicke von etwa 25 µm. Das elektrisch leitfähige Klebeband 1 ist biegsam ausgebildet. Der elektrische Kontakt zwischen der ersten Elektrodenschicht 5.1 und dem ersten Sammelleiter 7.1 wird durch die elektrische leitfähige Haftschicht 2 hergestellt.

Die elektrische Haftschicht 2 ist enthält beispielsweise einen wärmeaktivierbaren Kleber, der bei einer Temperatur von 180°C verklebt wird.

Figur 2E zeigt einen schematischen Querschnitt eines elektrisch steuerbaren Funktionselements 5. Das Funktionselement 5 ist ein elektrochromes Funktionselement, das auf einer innenseitigen Oberfläche einer ersten Scheibe 6 angeordnet ist. Das Funktionselements 5 erstreckt sich nahezu vollständig über die innenseitige Oberfläche der ersten Scheibe 6, abzüglich eines Randbereichs vom Scheibenrand der Scheibe 6. Das Funktionselement 5 wird von einem ersten, aus dem Klebeband 1 ausgebildeten Sammelleiter 7.1 (auch als Bus Bar bezeichnet) und einem zweiten, aus dem Klebeband 1 ausgebildeten Sammelleiter 7.2 (Bus Bar) elektrisch kontaktiert. Der erste Sammelleiter 7.1 ist auf einer ersten Elektrodenschicht 5.1 und der zweite Sammelleiter 7.2 ist auf einer zweiten Elektrodenschicht 5.1 des Funktionselements 5 aufgebracht.

Das elektrochrome Funktionselement 5 umfasst die zwei Elektrodenschichten 5.1 und zwei zwischen den beiden Elektrodenschichten 5.1 befindliche, elektrochemisch aktive Schichten 5.2, 5.3, die durch eine Elektrolytschicht 5.4 voneinander getrennt sind. Die beiden aktiven Schichten sind jeweils in der Lage, Ionen reversibel einzulagern, wobei zumindest eine der beiden Schichten 5.2, 5.3 aus einem elektrochromen Material besteht, das über verschiedene Oxidationszustände verfügt, die dem ein- oder ausgelagerten Zustand der Ionen entsprechen und eine unterschiedliche Färbung haben. Durch Anlegen einer elektrischen Spannung an den beiden Sammelleiters 7.1, 7.2 kann die Ein- bzw. Auslagerung der Ionen gesteuert werden, um damit gezielt die optische Transmission des Funktionselements 5 zu kontrollieren.

Zusätzlich kann an der oberen Elektrodenschicht 5.1 eine elektrisch isolierende Antireflektionsschicht 5.6 angeordnet sein. Die Antireflektionsschicht umfasst ein dielektrisches Material mit einem Brechungsindex von 1.4 bis 1.6. Die Antireflektionsschicht 5.6 weist dazu im Bereich des Sammelleiters 7.1 mehrere Aussparungen auf, so dass die Elektrodenschicht 5.1 über die elektrisch leitfähige Haftschicht 2 mit dem Sammelleiter 7.1 verbindbar ist bzw. mit dem Sammelleiter elektrisch verbunden ist. Die Dicke der Antireflexionsschicht beträgt vorzugsweise 20 nm bis 100 nm. Die Breite der Aussparungen ist ausreichend um einen elektrischen Kontakt zwischen Flächenelektrode 5.1 und Sammelleiter 7.1 zu gewährleisten. Derartige Antireflektionsschichten sind beispielhaft in der WO 2019/055306 A1 beschrieben, auf die für die Antireflektionsschicht und die Aussparungen verwiesen wird.

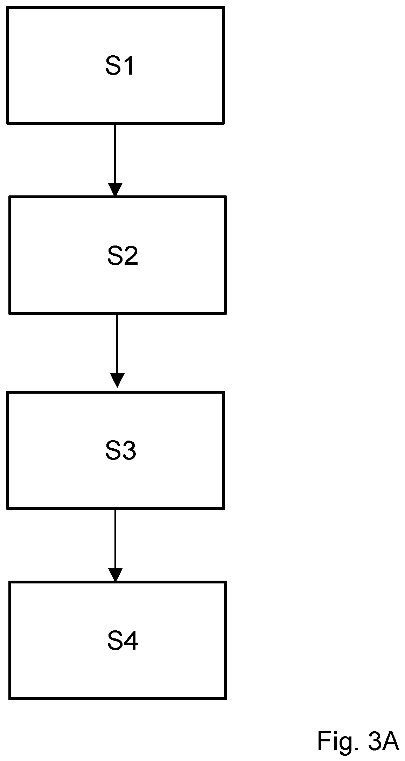

Figur 3A zeigt eine schematische Darstellung des erfindungsgemäßen Verfahrens zum Verlöten eines erfindungsgemäßen Anschlusselements 20 mit einem Sammelleiter 7.1, 7.2, wobei (die folgenden Verfahrensschritte S1-S4 werden in der angegebenen Reihenfolge durchgeführt):
S1: zwei Sammelleiter 7.1, 7.2 mit jeweils einer aus einer wärmeaktivierbaren, elektrisch leitfähige Haftschicht 2, einer Leiterbahn 4 und einer opaken, elektrisch isolierenden Abdeckung 3 bereitgestellt werden,
S2: die Abdeckung 3 der Sammelleiters 7.1, 7.2 in zu verlötenden Bereichen entfernt und zu verlötende Abschnitte der Leiterbahnen 4 der Sammelleiter 7.1, 7.2 freigelegt werden,
S3: die erste Klebeschicht 25.1 des Anschlusselements 20 derart am Sammelleiter 7.1, 7.2 angeordnet wird, dass sich die ersten Lotdepots 24.1, 24.1' unmittelbar über oder im Kontakt mit den freigelegten Abschnitten der Sammelleiters 7.1,7.2 befinden,
S4: mindestens eine Lötspitze an die zweite Seite II der Trägerfolie 22 im Wesentlichen deckungsgleich zu den ersten Lotdepots 24.1, 24.1' angelegt und die Lotdepots 24.1, 24.1' erhitzt werden, so dass Lötverbindungen 28.1, 28.1' zwischen den Flachleiter 21, 21' und den Sammelleitern 7.1, 7.2 gebildet werden.

Bei dem erfindungsgemäßen Verfahren berührt die Lötspitze das Lot nicht unmittelbar, sondern unter Zwischenlage der Trägerfolie 22 und dem jeweiligen Flachleiter 21,21'.

Bevorzugt wird die Temperatur der Lötspitze derart gewählt wird, dass die Haftschicht 2 der Sammelleiter 7.1, 7.2 unterhalb der Positionen der Lötverbindung 28.1, 28.1' auf eine maximale Temperatur von kleiner 300°C, bevorzugt kleiner 250°C und insbesondere von kleiner oder gleich 230°C erwärmt wird. Dies schützt den wärmeaktivierbaren Kleber der Haftschicht 2 vor Beschädigung.

Besonders bevorzugt wird eine Temperatur der Lötspitze von kleiner oder gleich 450°C, bevorzugt kleiner oder gleich 410°C und insbesondere kleiner oder gleich 350°C angelegt. Aufgrund der Wärmeableitung durch die jeweiligen Flachleiter 21, 21' und Leiterbahnen 4, führen Temperaturen der Lötspitze in diesem Bereich zu geeigneten maximalen Temperaturen in der Haftschicht 2.

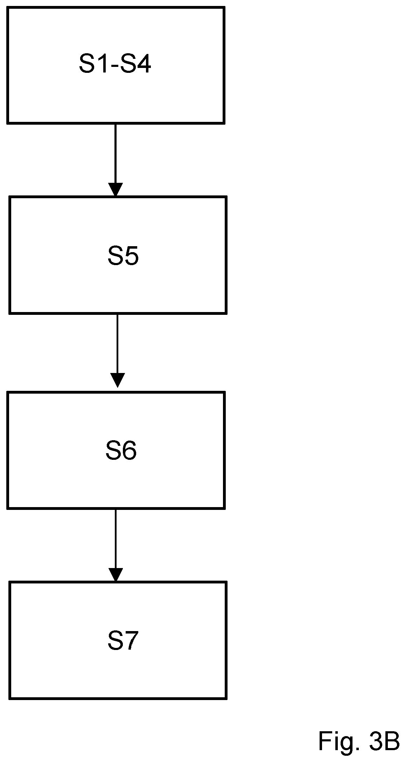

Figur 3B zeigt eine schematische Darstellung des erfindungsgemäßen Verfahrens zur Herstellung einer erfindungsgemäßen Isolierverglasung, wobei (die folgenden Verfahrensschritte S1-S7 werden in der angegebenen Reihenfolge durchgeführt)
die unter Figur 3A genannten Verfahrensschritte S1-S4 durchgeführt werden,
S5: ein Abstandshalter 9 auf die Scheibe 6 aufgelegt wird, wobei der Verbindungsbereich 31 des Anschlusselements 20 zwischen der Seitenfläche 9.2 des Abstandshalters 9 und der Scheibe 6 angeordnet wird,
S6: das Anschlusselement 20 über die Klebeschicht 25.2 auf der zweiten Seite II der Trägerfolie 22 mit der Außenfläche 9.3 des Abstandshalters 9 verklebt wird, und
S7: jeweils eine externe Zuleitung 40 in den jeweils zweiten Anschlussbereichen 27.2, 27,2' mit dem Flachleiter 21, 21' des Anschlusselements 20 verlötet werden.

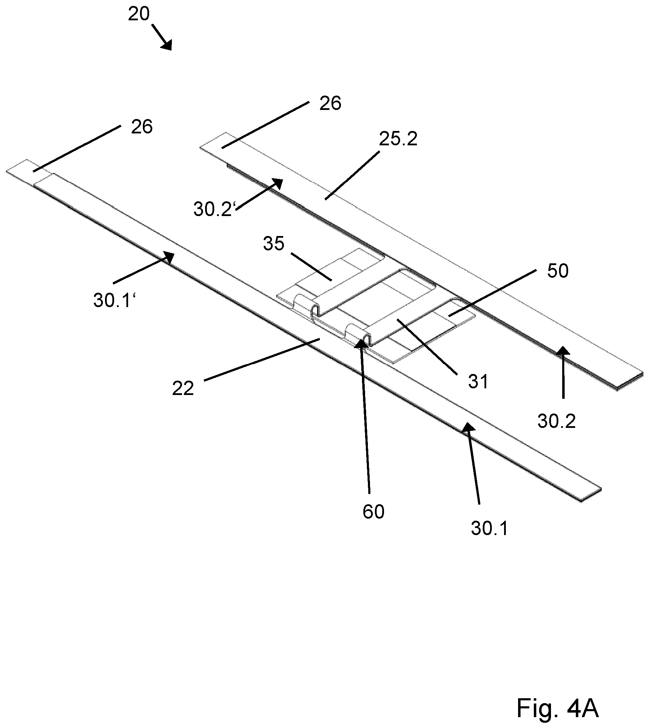

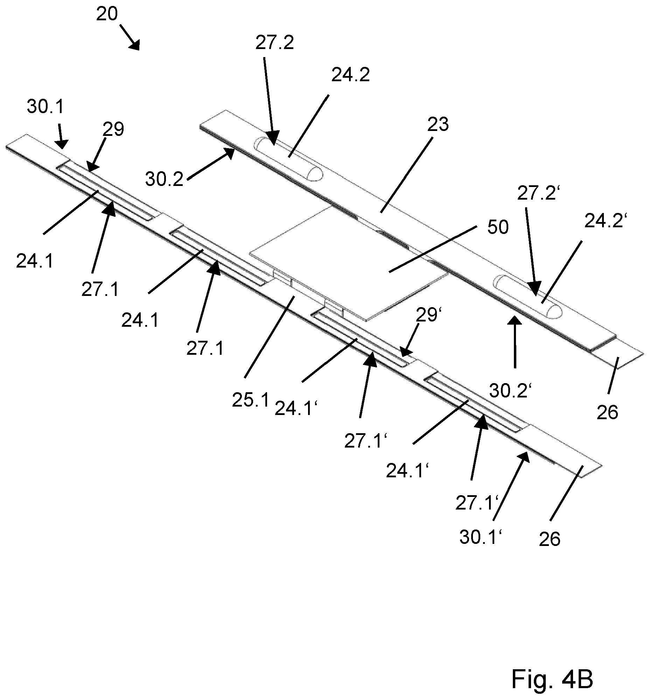

Figur 4A zeigt eine perspektivische Darstellung auf die Rückseite eines weiteren erfindungsgemäßen Anschlusselements 20. Figur 4B zeigt eine perspektivische Draufsicht auf die Vorderseite des erfindungsgemäßen Anschlusselements 20 aus Figur 4A. Das in den Figuren 4A und 4B dargestellte Anschlusselement 20 entspricht im Wesentlichen dem Anschlusselement 20 gemäß den Figuren 1A-D, so dass hier nur auf die Unterschiede eingegangen wird und ansonsten auf die Beschreibung zu den Figuren 1A-D verwiesen wird.

Das Anschlusselement 20 nach den Figur 4a und 4B weist eine elektrisch isolierende Trägerfolie 22 auf. Die Trägerfolie 22 ist hinreichend dünn und flexibel ausgebildet, dass sie sich den Gegebenheiten des Untergrunds anpassen, geringe Höhenunterschiede ausgleichen kann und insbesondere im Bereich des Verbindungsstegs 31 gekrümmt oder geknickt werden kann, beispielsweise bis zu 90° aus der Erstreckungsrichtung heraus.

Auf der ersten Seite I der Trägerfolie 22 sind im dargestellten Beispiel zwei Flachleiter 21, 21' angeordnet. Die Flachleiter 21, 21' sind elektrisch voneinander isoliert, so dass das Anschlusselement 20 eine zweipolige Verbindung ermöglicht.

Im dargestellten Beispiel weist die Trägerfolie 22 eine Doppel-T-Kontur auf. Das bedeutet, dass die Trägerfolie 22 jeweils zwei streifenförmig ausgebildete Schenkelpaare 30.1, 30.1' und 30.2, 30.2' aufweist, die jeweils Streifen ausbilden, wobei beide Streifen parallel zueinander verlaufen. Die Schenkelpaare 30.1, 30.1' und 30.2, 30.2' sind über einen mittig und orthogonal verlaufenden Verbindungsbereich 31 miteinander verbunden. Der Verbindungsbereich 31 weist hier beispielsweise eine optionale rechteckförmige Ausnehmung auf, die zwischen den Flachleitern 21, 21' angeordnet ist.

Am Verbindungsbereich 31 ist hier beispielsweise ein Dichtelement 35, beispielsweise ein rechteckförmiger Streifen aus Polyisobutylen auf einer Seite der Trägerfolie 22 angeordnet. Es versteht sich, dass auch beispielsweise zwei Streifen auf beiden Seiten der Trägerfolie 22 angeordnet sein können. Die zu verklebende Oberfläche des Dichtelements 35 ist mit einer Schutzfolie 50 bedeckt, die beispielsweise an zwei Seiten über das Dichtelement 35 hinausragt. Die Schutzfolie 50 dient dem Schutz des Anschlusselements 20 vor der eigentlichen Montage, insbesondere dem Verpacken mehrerer Anschlusselemente 20 in einer Verpackungseinheit oder ähnlichem. Die Schutzfolie 50 wird typischerweise kurz vor der Montage am eigentlichen Verwendungsort entfernt.

Die Flachleiter 21, 21' sind hier vollständig auf der Trägerfolie 22 angeordnet. Jeder der Flachleiter 21, 21' weist an einem Ende jeweils zwei erste Anschlussbereiche 27.1, 27.1' (d.h. zwei erste Anschlussbereiche 27.1 für den Flachleiter 21 und zwei erste Anschlussbereiche 27.1' für den Flachleiter 21') und am entgegengesetzten Ende jeweils einen zweiten Anschlussbereich 27.2, 27.2' auf.

Die Anschlussbereiche sind hier auf den Schenkeln der Doppel-T-Struktur angeordnet. So befinden sich die zwei ersten Anschlussbereiche 27.1 des Flachleiters 21 auf dem Schenkel 30.1, die zwei ersten Anschlussbereiche 27.1' des Flachleiters 21' auf dem Schenkel 30.1', der zweite Anschlussbereich 27.2 des Flachleiters 21 auf dem Schenkel 30.2 und der zweite Anschlussbereich 27.2' des Flachleiters 21' auf dem Schenkel 30.2'. Folglich sind die zwei ersten Anschlussbereiche 27.1 des Flachleiters 21 mit dem zweiten Anschlussbereich 27.2 elektrisch leitend verbunden. Des Weiteren sind die zwei ersten Anschlussbereiche 27.1' des Flachleiters 21' mit dem zweiten Anschlussbereich 27.2' elektrisch leitend verbunden. Die Flachleiter 21 und 21' sind voneinander elektrisch isoliert.

Die Flachleiter 21, 21' weisen an ihrem jeweils zweiten Anschlussbereich 27.2, 27.2' beispielsweise jeweils ein zweites Lotdepot 24.2, 24.2' auf (also insgesamt zwei Lotdepots auf den Schenkeln 30.2 und 30.2' zusammen). Des Weiteren weisen die Flachleiter 21, 21' an ihren zwei ersten Anschlussbereichen 27.1, 27.1' ebenfalls jeweils ein zweites Lotdepot 24.1, 24.1' auf (also insgesamt vier Lotdepots auf den Schenkeln 30.1 und 30.1' zusammen). Hierdurch lässt sich eine Redundanz in der Kontaktierung erzeugen und dadurch Ausfallsraten reduzieren.

Am Übergang von den Schenkeln 30.1 und 30.1' zu dem zweigeteilten Verbindungsbereich 31 sind beispielsweise Zugentlastungen 60 in Form von U-förmigen Schleifen in Trägerfolie 22, Flachleiter 21 und Abdeckfolie 23 angeordnet.

Die zu verklebende Oberflächen der ersten und zweiten Klebeschicht 25.1, 25.2 sind mit jeweils einer Schutzfolie 26 bedeckt, die beispielsweise an einer Seite über die jeweilige Klebeschicht 25.1, 25.2 hinausragt. Die Schutzfolie 26 dient dem Schutz der Klebeschichten 25.1, 25.2 des Anschlusselements 20 vor der eigentlichen Montage, insbesondere dem Verkleben mehrere Anschlusselemente 20 in einer Packungseinheit untereinander oder ähnlichem. Die Schutzfolie 26 wird typischerweise kurz vor der Montage am eigentlichen Verwendungsort entfernt.

### Bezugszeichenliste:

- 1: Klebeband
- 2: Haftschicht
- 3: Abdeckung
- 4: Leiterbahn
- 5: Funktionselement
- 5.1: Elektrodenschicht
- 5.2: aktive Schicht
- 5.3: aktive Schicht
- 5.4: Elektrolytschicht
- 5.6: Antireflektionsschicht
- 6: erste Scheibe
- 6.1: Scheibe
- 6.2: Zwischenschicht
- 6.3: EC-Scheibe
- 7.1: erster Sammelleiter
- 7.2: zweiter Sammelleiter
- 8: zweite Scheibe
- 9: Abstandshalter
- 9.1: erste Scheibenkontaktfläche
- 9.2: zweite Scheibenkontaktfläche
- 9.3: Außenfläche des Abstandshalters
- 9.4: Verglasungsinnenraumfläche des Abstandshalters
- 9.5: Hohlraum des Abstandshalters
- 10: Isolierverglasung
- 11: Verglasungsinnenraum
- 13: Verglasungsaußenraum
- 14: Abdichtung
- 15: undurchsichtige Beschichtung
- 20: Anschlusselement
- 21: Flachleiter des Anschlusselements 20
- 22: Trägerfolie
- 23: Abdeckfolie
- 24.1, 24.1': erstes Lotdepot
- 24.2, 24.2': zweites Lotdepot
- 25.1: erste Klebeschicht des Anschlusselements 20
- 25.2: zweite Klebeschicht des Anschlusselements 20
- 26: Schutzfolie der Klebeschicht 25.1, 25.2
- 27.1, 27.1': erster Anschlussbereich
- 27.2, 27.2': zweiter Anschlussbereich
- 28.1, 28.1', 28.2, 28.2': Lötverbindung
- 29, 29': Aussparung
- 30.1, 30.1', 30.2, 30.2': Schenkel des Anschlusselements 20
- 31: Verbindungsbereich des Anschlusselements 20
- 35: (optionales) Dichtelement
- 40: Zuleitung
- 50: Schutzfolie
- 60: Zugentlastung
- I: erste Seite, Anschlussseite (Vorderseite)
- II: zweite Seite, Rückseite (Abdeckseite)
- S1-S7: Verfahrensschritte

## Patentansprüche

1. Isolierverglasung (10), umfassend mindestens eine erste Scheibe (6), eine zweite Scheibe (8) und mindestens einen Abstandshalter (9), der zwei Scheibenkontaktflächen (9.1, 9.2) aufweist, die parallel zueinander verlaufen, wobei
• eine erste Scheibenkontaktfläche (9.1) über ein Dichtmittel mit der ersten Scheibe (6) verbunden ist und eine zweite Scheibenkontaktfläche (9.2) über ein Dichtmittel mit der zweiten Scheibe (8) verbunden ist, so dass ein Verglasungsinnenraum (11) und ein Verglasungsaußenraum (13) gebildet werden,
• die erste Scheibe (6) auf der dem Verglasungsinnenraum zugewandten Seite zumindest teilweise mit einer elektrisch leitfähigen Beschichtung und/oder einem elektrisch steuerbaren Funktionselement (5) versehen ist und zwei Sammelleiter (7.1, 7.2) zur elektrischen Kontaktierung einer elektrischen leitfähigen Beschichtung und/oder eines elektrisch steuerbaren Funktionselements (5) vorgesehen sind,
• mindestens ein Sammelleiter (7.1, 7.2) ein elektrisch leitfähiges Klebeband (1) umfasst, und das elektrisch leitfähige Klebeband (1) eine elektrisch leitfähige Haftschicht (2), eine Leiterbahn (4) und eine opake, elektrisch isolierende Abdeckung (3) umfasst,
wobei die Isolierverglasung (10) ein Anschlusselement (20), insbesondere zur Kontaktierung der elektrisch leitfähigen Beschichtung und/oder dem elektrisch steuerbaren Funktionselement (5) in der Isolierverglasung (10), aufweist, mindestens umfassend:
• mindestens einen Flachleiter (21, 21'), der auf einer ersten Seite (I) einer elektrisch isolierenden Trägerfolie (22) angeordnet ist, wobei
• der Flachleiter (21, 21') mindestens einen ersten Anschlussbereich (27.1, 27.1') mit mindestens einem ersten Lotdepot (24.1, 24.1') und mindestens einen zweiten Anschlussbereich (27.2, 27.2') mit mindestens einem zweiten Lotdedot (24.2, 24.2') aufweist, und
• mindestens eine zweite Klebeschicht (25.2), die unterhalb und/oder neben dem zweiten Anschlussbereich (27.2, 27.2') auf einer der ersten Seite (I) abgewandten zweiten Seite (II) der Trägerfolie (22) angeordnet ist,
und
• der mindestens eine Flachleiter (21, 21') des Anschlusselements (20) im erstem Anschlussbereich (27.1, 27.1') mit dem Sammelleiter (7.1, 7.2) verlötet ist,
• das Anschlusselement (20) zwischen Abstandshalter (9) und der ersten Scheibe (6) aus dem Verglasungsinnenraum (11) herausgeführt ist und
• das Anschlusselement (20) auf der dem zweiten Anschlussbereich (27.2, 27.2') abgewandten Seite (II) der Trägerfolie (22) über die zweite Klebeschicht (25.2) mit einer Außenfläche (9.3) des Abstandshalters (9) verbunden ist.

2. Isolierverglasung (10) nach Anspruch 1, wobei mindestens eine erste Klebeschicht (25.1) um den ersten Anschlussbereich (27.1, 27.1') auf der ersten Seite (I) der Trägerfolie (22) und bevorzugt zumindest abschnittsweise um das erste Lotdepot (24.1, 24.1') angeordnet ist.

3. Isolierverglasung (10) nach Anspruch 1 oder 2, wobei eine Abdeckfolie (23) zumindest abschnittsweise und bevorzugt im Wesentlichen vollständig auf der ersten Seite (I) der Trägerfolie (22) und auf dem Flachleiter (21) angeordnet ist.

4. Isolierverglasung (10) nach Anspruch 2 oder 3, wobei die Abdeckfolie (23) und/oder die erste Klebeschicht (25.1) angrenzend an das erste Lotdepot (24.1, 24.1') mindestens eine Aussparung (29,29') aufweisen, die sich bevorzugt bis zum Rand der Trägerfolie (22) erstreckt.

5. Isolierverglasung (10) nach einen der Ansprüche 1 bis 4, wobei die Trägerfolie (22), die Abdeckfolie (23) und/oder die Klebeschicht (25) opak und elektrisch isolierend ausgebildet sind und bevorzugt eine Polymerfolie, besonders bevorzugt eine Polyimid-Folie, aufweisen und insbesondere die Trägerfolie (22) und/oder die Abdeckfolie (23) daraus bestehen.

6. Isolierverglasung (10) nach einen der Ansprüche 1 bis 5, wobei zwei Flachleiter (21, 21') auf einer Trägerfolie (22) angeordnet sind und bevorzugt die Trägerfolie (22) eine Doppel-T-Kontur aufweist wobei jeweils ein Anschlussbereich (27.1, 27.1', 27.2, 27.2') auf einem Schenkel (30.1, 30.1', 30.2, 30.2') der Doppel-T-Kontur angeordnet ist.

7. Isolierverglasung (10) nach einen der Ansprüche 1 bis 6, wobei die Trägerfolie (22) im erstem Anschlussbereich (27.1, 27.1') und/oder zweiten Anschlussbereich (27.2, 27.2') jeweils streifenförmig ausgebildet ist und bevorzugt die Streifen parallel zueinander angeordnet sind und insbesondere die parallelen Streifen durch mindestens einen im Wesentlichen orthogonal verlaufenden Verbindungsbereich (31) miteinander verbunden sind.

8. Isolierverglasung (10) nach Anspruch 7, wobei am Verbindungsbereich (31) mindestens ein Dichtelement (35), bevorzugt ein rechteckiges, folienartiges Dichtelement, angeordnet ist, welches besonders bevorzugt Polyisobutylen enthält oder daraus besteht.

9. Isolierverglasung (10) nach einen der Ansprüche 1 bis 8, wobei der Flachleiter (21) ein Metall, vorzugsweise Kupfer, Zinn und/oder Silber und insbesondere verzinntes Kupfer, enthält oder daraus besteht.

10. Isolierverglasung (10) nach einem der Ansprüche 1 bis 9, wobei das elektrisch leitfähige Klebeband (1) über die elektrisch leitfähige Haftschicht (2) mit der elektrisch leitfähigen Beschichtung und/oder dem elektrisch steuerbaren Funktionselement (5) verbunden ist und die elektrisch leitfähige Haftschicht (2) bevorzugt einen wärmeaktivierbaren Kleber enthält oder daraus besteht, und insbesondere die Aktivierungstemperatur des Klebers von 180°C bis 250°C beträgt.

11. Verfahren zur Herstellung einer erfindungsgemäßen Isolierverglasung nach einem der Ansprüche 1 bis 10, wobei zumindest
a) die Verfahrensschritte i. bis iii. durchgeführt werden, wobei
i. mindestens ein Sammelleiter (7.1, 7.2) mit einer wärmeaktivierbaren, elektrisch leitfähigen Haftschicht (2), einer Leiterbahn (4) und einer opaken, elektrisch isolierenden Abdeckung (3) bereitgestellt wird,
ii. die Abdeckung (3) des Sammelleiters (7.1, 7.2) in einem zu verlötenden Bereich entfernt wird, bevorzugt durch Laserablation, und ein zu verlötender Abschnitt der Leiterbahn (4) des Sammelleiters (7.1, 7.2) freigelegt wird,
iii. die erste Klebeschicht (25.1) des Anschlusselements (20) derart am Sammelleiter (7.1, 7.2) angeordnet wird, dass sich das erste Lotdepot (24.1, 24.1') unmittelbar über oder im Kontakt mit dem freigelegten Abschnitt des Sammelleiters (7.1,7.2) befindet,
b) ein Abstandshalter (9) auf die erste Scheibe (6) aufgelegt wird, wobei der Verbindungsbereich (31) des Anschlusselements (20) zwischen einer Seitenfläche (9.2) des Abstandshalters (9) und der ersten Scheibe (6) angeordnet wird,
c) das Anschlusselement (20) über die zweite Klebeschicht (25.2) auf der zweiten Seite (II) der Trägerfolie (22) mit der Außenfläche (9.3) des Abstandshalters (9) verklebt wird, und
d) zumindest jeweils eine externe Zuleitung (40) im zweiten Anschlussbereich (27.2, 27,2') mit dem Flachleiter (21, 21') des Anschlusselements (20) verlötet wird.

12. Verfahren nach Anspruch 11, wobei die Temperatur der Lötspitze derart gewählt wird, dass die Haftschicht (2) des Sammelleiters (7.1, 7.2) unterhalb der Lötstelle auf eine maximale Temperatur von kleiner 300°C, bevorzugt kleiner 250°C und insbesondere von kleiner oder gleich 230°C erwärmt wird.

13. Verfahren nach Anspruch 11 oder 12, wobei eine maximale Temperatur an dem Lötelement von kleiner oder gleich 450°C, bevorzugt kleiner oder gleich 410°C und insbesondere kleiner oder gleich 350°C verwendet wird.

14. Verfahren nach einem der Ansprüche 11 bis 13, wobei in Verfahrensschritt a) in einem weiteren Verfahrensschritt (iv.) mindestens eine Lötspitze an die zweite Seite (II) der Trägerfolie (22) im Wesentlichen deckungsgleich zu dem ersten Lotdepot (24.1, 24.1') angelegt und das Lotdepot (24.1, 24.1') erhitzt wird, so dass eine Lötverbindung (28.1, 28.1') zwischen Flachleiter (21, 21') und Sammelleiter (7.1, 7.2) gebildet wird.

15. Verwendung eines Anschlusselements (20) in einer Isolierverglasung (10) nach einem der Ansprüche 1 bis 10 oder des Verfahrens nach einem der Ansprüche 11 bis 14 zur elektrischen Kontaktierung eines Sammelleiters (7.1,7.2), der mittels eines elektrisch leitfähigen, wärmeaktivierbaren Klebers auf die elektrisch leitfähige Beschichtung und/oder das elektrisch steuerbares Funktionselement (5) aufgeklebt und elektrisch leitend verbunden ist.

## Claims

1. An insulating glazing (10) comprising at least one first pane (6), one second pane (8) and at least one spacer (9) having two pane contact surfaces (9.1, 9.2) which run parallel to one another, wherein
• a first pane contact surface (9.1) is connected via a sealing means to the first pane (6) and a second pane contact surface (9.2) is connected via a sealing means to the second pane (8), so that a glazing interior (11) and a glazing exterior (13) are formed,
• the first pane (6) is at least partially provided with an electrically conductive coating and/or an electrically controllable functional element (5) on the side facing the glazing interior and two bus bars (7.1, 7.2) are provided for electrically contacting an electrically conductive coating and/or an electrically controllable functional element (5),
• at least one bus bar (7.1, 7.2) comprises an electrically conductive adhesive tape (1), and the electrically conductive adhesive tape (1) comprises an electrically conductive bonding layer (2), a conductor track (4) and an opaque, electrically insulating covering (3),
wherein the insulating glazing (10) has a connection element (20), in particular for contacting the electrically conductive coating and/or the electrically controllable functional element (5) in the insulating glazing (10), at least comprising:
• at least one flat conductor (21, 21') which is arranged on a first side (I) of an electrically insulating carrier film (22), wherein
• the flat conductor (21, 21') has at least one first connection region (27.1, 27.1') with at least one first solder deposit (24.1, 24.1') and at least one second connection region (27.2, 27.2') with at least one second solder deposit (24.2, 24.2'), and
• at least one second adhesive layer (25.2) which is arranged below and/or next to the second connection region (27.2, 27.2') on a second side (II) of the carrier film (22) facing away from the first side (I),
and
• the at least one flat conductor (21, 21') of the connection element (20) is soldered to the bus bar (7.1, 7.2) in the first connection region (27.1, 27.1'),
• the connection element (20) is led out of the glazing interior (11) between the spacer (9) and the first pane (6), and
• the connection element (20) on the side (II) of the carrier film (22) facing away from the second connection region (27.2, 27.2') is connected to an outer surface (9.3) of the spacer (9) via the second adhesive layer (25.2).

2. The insulating glazing (10) according to claim 1, wherein at least one first adhesive layer (25.1) is arranged around the first connection region (27.1, 27.1') on the first side (I) of the carrier film (22) and preferably at least in portions around the first solder deposit (24.1, 24.1').

3. The insulating glazing (10) according to claim 1 or 2, wherein a cover film (23) is arranged at least in portions and preferably substantially completely on the first side (I) of the carrier film (22) and on the flat conductor (21).

4. The insulating glazing (10) according to claim 2 or 3, wherein the cover film (23) and/or the first adhesive layer (25.1), adjacent to the first solder deposit (24.1, 24.1'), have at least one recess (29, 29') which preferably extends up to the edge of the carrier film (22).

5. The insulating glazing (10) according to any of claims 1 to 4, wherein the carrier film (22), the cover film (23) and/or the adhesive layer (25) are opaque and electrically insulating and preferably have a polymer film, particularly preferably a polyimide film, and in particular the carrier film (22) and/or the cover film (23) consist thereof.

6. The insulating glazing (10) according to any of claims 1 to 5, wherein two flat conductors (21, 21') are arranged on a carrier film (22) and preferably the carrier film (22) has a double-T contour, wherein a connection region (27.1, 27.1', 27.2, 27.2') is arranged on a limb (30.1, 30.1', 30.2, 30.2') of the double-T contour.

7. The insulating glazing (10) according to any of claims 1 to 6, wherein the carrier film (22) is formed in the first connection region (27.1, 27.1') and/or second connection region (27.2, 27.2') in each case in a strip-shaped manner, and the strips are preferably arranged parallel to one another, and in particular the parallel strips are connected to one another by at least one connection region (31) extending substantially orthogonally.

8. The insulating glazing (10) according to claim 7, wherein at least one sealing element (35), preferably a rectangular film-like sealing element, is arranged on the connection region (31) and particularly preferably contains or consists of polyisobutylene.

9. The insulating glazing (10) according to any of claims 1 to 8, wherein the flat conductor (21) contains or consists of a metal, preferably copper, tin and/or silver and in particular tin-plated copper.

10. The insulating glazing (10) according to any of claims 1 to 9, wherein the electrically conductive adhesive tape (1) is connected to the electrically conductive coating and/or the electrically controllable functional element (5) via the electrically conductive bonding layer (2), and the electrically conductive bonding layer (2) preferably contains or consists of a heat-activatable adhesive, and in particular the activation temperature of the adhesive is from 180°C to 250°C.

11. A method for producing an insulating glazing according to the invention according to any of claims 1 to 10, wherein at least
a) the method steps i. to iii. are carried out, wherein
i. at least one bus bar (7.1, 7.2) with a heat-activatable, electrically conductive bonding layer (2), a conductor track (4) and an opaque, electrically insulating covering (3) is provided,
ii. the covering (3) of the bus bar (7.1, 7.2) is removed in a region to be soldered, preferably by laser ablation, and a portion of the conductor track (4) of the bus bar (7.1, 7.2) to be soldered is exposed,
iii. the first adhesive layer (25.1) of the connection element (20) is arranged on the bus bar (7.1, 7.2) in such a way that the first solder deposit (24.1, 24.1') is located directly above or in contact with the exposed portion of the bus bar (7.1, 7.2),
b) a spacer (9) is placed on the first pane (6), wherein the connection region (31) of the connection element (20) is arranged between a side surface (9.2) of the spacer (9) and the first pane (6),
c) the connection element (20) is bonded to the outer surface (9.3) of the spacer (9) via the second adhesive layer (25.2) on the second side (II) of the carrier film (22), and
d) at least one external feed line (40) in each case is soldered in the second connection region (27.2, 27.2') to the flat conductor (21, 21') of the connection element (20).

12. The method according to claim 11, wherein the temperature of the soldering tip is selected such that the bonding layer (2) of the bus bar (7.1, 7.2) is heated below the soldering point to a maximum temperature of less than 300°C, preferably less than 250°C and in particular less than or equal to 230°C.

13. The method according to claim 11 or 12, wherein a maximum temperature at the soldering element of less than or equal to 450°C, preferably less than or equal to 410°C, and in particular less than or equal to 350°C is used.

14. The method according to any of claims 11 to 13, wherein in method step a) in a further method step (iv.) at least one soldering tip is applied to the second side (II) of the carrier film (22) substantially congruently with the first solder deposit (24.1, 24.1') and the solder deposit (24.1, 24.1') is heated so that a solder joint (28.1, 28.1') is formed between the flat conductor (21, 21') and the bus bar (7.1, 7.2).

15. A use of a connection element (20) in an insulating glazing (10) according to any of claims 1 to 10 or of the method according to any of claims 11 to 14 for electrically contacting a bus bar (7.1, 7.2) which is bonded and electrically conductively connected by means of an electrically conductive, heat-activatable adhesive to the electrically conductive coating and/or the electrically controllable functional element (5).

## Revendications

1. Vitrage isolant (10) comprenant au moins une première vitre (6), une seconde vitre (8) et au moins une entretoise (9) présentant deux surfaces de contact (9.1, 9.2) avec les vitres qui sont parallèles l'une à l'autre, dans lequel
• une première surface (9.1) de contact avec la vitre est reliée à la première vitre (6) au moyen d'un moyen d'étanchéité, et une seconde surface de contact (9.2) avec la vitre est reliée à la seconde vitre (8) au moyen d'un moyen d'étanchéité, de sorte qu'un espace intérieur de vitrage (11) et un espace extérieur de vitrage (13) sont formés,
• la première vitre (6) est pourvue au moins en partie, sur la face tournée vers l'espace intérieur de vitrage, d'un revêtement électroconducteur et/ou d'un élément fonctionnel (5) pouvant être commandé électriquement, et deux conducteurs collecteurs (7.1, 7.2) sont prévus pour la mise en contact électrique avec un revêtement électroconducteur et/ou un élément fonctionnel (5) pouvant être commandé électriquement,
• au moins un conducteur collecteur (7.1, 7.2) comprend un ruban adhésif électroconducteur (1), et le ruban adhésif électroconducteur (1) comprend une couche adhésive électroconductrice (2), une piste conductrice (4) et un moyen de recouvrement (3) opaque électriquement isolant,
dans lequel le vitrage isolant (10) présente un élément de raccordement (20), en particulier pour la mise en contact avec le revêtement électroconducteur et/ou l'élément fonctionnel (5) pouvant être commandé électriquement dans le vitrage isolant (10), comprenant au moins :
• au moins un conducteur plat (21, 21') disposé sur une première face (I) d'un film de support (22) électriquement isolant, dans lequel
• le conducteur plat (21, 21') présente au moins une première zone de raccordement (27.1, 27.1') comportant au moins un premier dépôt de soudure (24.1, 24.1') et au moins une seconde zone de raccordement (27.2, 27.2') comportant au moins un second dépôt de soudure (24.2, 24.2'), et
• au moins une seconde couche adhésive (25.2) disposée en dessous et/ou à côté de la seconde zone de raccordement (27.2, 27.2') sur une seconde face (II) du film de support (22) opposée à la première face (I),
et
• l'au moins un conducteur plat (21, 21') de l'élément de raccordement (20) est soudé au conducteur collecteur (7.1, 7.2) dans la première zone de raccordement (27.1, 27.1'),
• l'élément de raccordement (20) entre l'entretoise (9) et la première vitre (6) dépasse de l'espace intérieur de vitrage (11) et
• l'élément de raccordement (20) est collé à une surface extérieure (9.3) de l'entretoise (9) sur la face (II) du film de support (22) opposée à la seconde zone de raccordement (27.2, 27.2') par l'intermédiaire de la seconde couche adhésive (25.2).

2. Vitrage isolant (10) selon la revendication 1, dans lequel au moins une première couche adhésive (25.1) est disposée autour de la première zone de raccordement (27.1, 27.1') sur la première face (I) du film de support (22) et, de préférence, au moins dans certaines sections, autour du premier dépôt de soudure (24.1, 24.1').

3. Vitrage isolant (10) selon la revendication 1 ou 2, dans lequel un film de recouvrement (23) est disposé, au moins dans certaines sections et de préférence sensiblement entièrement, sur la première face (I) du film de support (22) et sur le conducteur plat (21).

4. Vitrage isolant (10) selon la revendication 2 ou 3, dans lequel le film de recouvrement (23) et/ou la première couche adhésive (25.1) présentent, adjacents au premier dépôt de soudure (24.1, 24.1'), au moins un évidement (29, 29') qui s'étend de préférence jusqu'au bord du film de support (22).

5. Vitrage isolant (10) selon l'une des revendications 1 à 4, dans lequel le film de support (22), le film de recouvrement (23) et/ou la couche adhésive (25) sont réalisés de manière à être opaques et électriquement isolants et sont de préférence constitués d'un film polymère, de manière particulièrement préférée d'un film de polyimide, et en particulier le film de support (22) et/ou le film de recouvrement (23) sont constitués de celui-ci.

6. Vitrage isolant (10) selon l'une des revendications 1 à 5, dans lequel deux conducteurs plats (21, 21') sont disposés sur un film de support (22) et, de préférence, le film de support (22) présente un profil en double T, dans lequel respectivement une zone de raccordement (27.1, 27.1', 27.2, 27.2') est disposée sur une branche (30.1, 30.1', 30.2, 30.2') du profil en double T.

7. Vitrage isolant (10) selon l'une des revendications 1 à 6, dans lequel le film de support (22) est réalisé respectivement sous forme de bandes dans la première zone de raccordement (27.1, 27.1') et/ou la seconde zone de raccordement (27.2, 27.2') et, de préférence, les bandes sont disposées parallèlement les unes aux autres et, en particulier, les bandes parallèles sont reliées entre elles par au moins une zone de liaison (31) s'étendant sensiblement orthogonalement.

8. Vitrage isolant (10) selon la revendication 7, dans lequel au moins un élément d'étanchéité (35), de préférence un élément d'étanchéité rectangulaire de type film, est disposé au niveau de la zone de liaison (31), lequel contient de manière particulièrement préférée du polyisobutylène ou est constitué de celui-ci.

9. Vitrage isolant (10) selon l'une des revendications 1 à 8, dans lequel le conducteur plat (21) contient un métal, de préférence du cuivre, de l'étain et/ou de l'argent, et en particulier du cuivre étamé, ou est constitué de celui-ci.

10. Vitrage isolant (10) selon l'une des revendications 1 à 9, dans lequel la bande adhésive électroconductrice (1) est reliée, par l'intermédiaire de la couche adhésive (2) électroconductrice, au revêtement électroconducteur et/ou à l'élément fonctionnel (5) pouvant être commandé électriquement, et la couche adhésive (2) électroconductrice contient de préférence un adhésif thermoactivable ou est constituée de celui-ci, et, en particulier, la température d'activation de l'adhésif va de 180 °C à 250 °C.

11. Procédé pour la fabrication d'un vitrage isolant selon l'invention selon l'une des revendications 1 à 10, dans lequel au moins
a) les étapes de procédé i. à iii. sont mises en œuvre, dans lequel
i. au moins un conducteur collecteur (7.1, 7.2) est fourni, comportant une couche adhésive (2) thermoactivable et électriquement conductrice, une piste conductrice (4) et un moyen de recouvrement (3) opaque et électriquement isolant,
ii. le moyen de recouvrement (3) du conducteur collecteur (7.1, 7.2) est retiré dans une zone à souder, de préférence par ablation au laser, et une section de la piste conductrice (4) du conducteur collecteur (7.1, 7.2) devant être soudée est dégagée,
iii. la première couche adhésive (25.1) de l'élément de raccordement (20) est disposée sur le conducteur collecteur (7.1, 7.2) de telle sorte que le premier dépôt de soudure (24.1, 24.1') se trouve directement au-dessus de la partie dégagée du conducteur collecteur (7.1, 7.2) ou en contact avec celle-ci,
b) une entretoise (9) est placée sur la première vitre (6), dans lequel la zone de raccordement (31) de l'élément de raccordement (20) est disposée entre une face latérale (9.2) de l'entretoise (9) et la première vitre (6),
c) l'élément de raccordement (20) est collé contre la surface extérieure (9.3) de l'entretoise (9) sur la seconde face (II) du film de support (22) par l'intermédiaire de la seconde couche adhésive (25.2), et
d) au moins respectivement une ligne externe (40) dans la seconde zone de raccordement (27.2, 27,2') est soudée au conducteur plat (21, 21') de l'élément de raccordement (20).

12. Procédé selon la revendication 11, dans lequel la température de la panne de soudage est choisie de telle sorte que la couche adhésive (2) du conducteur collecteur (7.1, 7.2) en dessous de l'emplacement de soudure est chauffée à une température maximale inférieure à 300 °C, de préférence inférieure à 250 °C et, en particulier, inférieure ou égale à 230 °C.

13. Procédé selon la revendication 11 ou 12, dans lequel est utilisée une température maximale au niveau de l'élément de soudure inférieure ou égale à 450 °C, de préférence inférieure ou égale à 410 °C et, en particulier, inférieure ou égale à 350 °C.

14. Procédé selon l'une des revendications 11 à 13, dans lequel, à l'étape de procédé a), au cours d'une étape de procédé supplémentaire (iv.), au moins une panne de soudage est appliquée sur la seconde face (II) du film de support (22) de façon essentiellement superposée avec le premier dépôt de soudure (24.1, 24.1'), et le dépôt de soudure (24.1, 24.1') est chauffé, de sorte qu'une liaison soudée (28.1, 28.1') est formée entre le conducteur plat (21, 21') et le conducteur collecteur (7.1, 7.2).

15. Utilisation d'un élément de raccordement (20) dans un vitrage isolant (10) selon l'une des revendications 1 à 10 ou selon le procédé selon l'une des revendications 11 à 14, pour la mise en contact électrique avec un conducteur collecteur (7.1, 7.2) qui est collé sur le revêtement électroconducteur et/ou l'élément fonctionnel (5) pouvant être commandé électriquement et est connecté de manière électroconductrice à ceux-ci au moyen d'une colle électroconductrice thermoactivable.
